(19)

Europäisches
Patentamt
European
Patent Office
Office européen
des brevets

(11) **EP 4 351 096 A1**

(12) **EUROPEAN PATENT APPLICATION**
published in accordance with Art. 153(4) EPC

(43) Date of publication:
**10.04.2024 Bulletin 2024/15**

(21) Application number: **22827626.7**

(22) Date of filing: **22.06.2022**

(51) International Patent Classification (IPC):
**H04L 25/49** (2006.01)    **H04L 25/03** (2006.01)
**H04L 25/02** (2006.01)

(52) Cooperative Patent Classification (CPC):
**H04L 25/02; H04L 25/03; H04L 25/49**

(86) International application number:
**PCT/CN2022/100520**

(87) International publication number:
**WO 2022/268134 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.06.2021 CN 202110706187**

(71) Applicant: **Huawei Technologies Co., Ltd.
Longgang
Shenzhen, Guangdong 518129 (CN)**

(72) Inventors:
• **HUANGFU, Yourui**
  **Shenzhen, Guangdong 518129 (CN)**
• **ZHANG, Gongzheng**
  **Shenzhen, Guangdong 518129 (CN)**
• **WANG, Jian**
  **Shenzhen, Guangdong 518129 (CN)**
• **LI, Rong**
  **Shenzhen, Guangdong 518129 (CN)**

(74) Representative: **Maiwald GmbH
Engineering
Elisenhof
Elisenstrasse 3
80335 München (DE)**

(54) **PREPROCESSING PARAMETER UPDATING METHOD AND DEVICE**

(57) This application relates to the field of communication technologies, and provides a method and an apparatus for updating a preprocessing parameter. A first apparatus performs preprocessing and power amplification on a first signal by using a first preprocessing parameter, to obtain a third signal; and then sends the third signal to a second apparatus, where the third signal is changed to a fourth signal after passing through a channel between the first apparatus and the second apparatus. The second apparatus performs channel estimation and channel equalization by using the fourth signal, to obtain a fifth signal, and then determines an updated preprocessing parameter based on the fifth signal. Next, the second apparatus indicates the updated preprocessing parameter to the first apparatus. Channel estimation and channel equalization can eliminate a linear part of the fourth signal. When the updated preprocessing parameter is estimated, only impact of a nonlinear part on the signal is considered, so that an optimal preprocessing parameter can be obtained more accurately, to implement accurate preprocessing and improve working efficiency of a communication device.

FIG. 3

## Description

## CROSS-REFERENCE TO RELATED APPLICATIONS

This application claims priority to Chinese Patent Application No. 202110706187.7, filed with the China National Intellectual Property Administration on June 24, 2021 and entitled "METHOD AND APPARATUS FOR UPDATING PREPROCESSING PARAMETER", which is incorporated herein by reference in its entirety.

## TECHNICAL FIELD

Embodiments of this application relate to the field of communication, and in particular, to a method and an apparatus for updating a preprocessing parameter.

## BACKGROUND

Some devices in a communication system are nonlinear, such as a power amplifier (power amplifier, PA). Regardless of whether the power amplifier works in a linear region or a nonlinear region, a mapping relationship between an output signal and an input signal includes a nonlinear component. When the power amplifier works in a linear region, the nonlinear component is relatively weak, and when the power amplifier works in a nonlinear region, the nonlinear component is relatively strong.

To improve working efficiency of a communication device such as a power amplifier and reduce system costs, it is generally expected that the power amplifier works in a nonlinear region (an amplification multiple/gain in the nonlinear region is relatively large), and no excessive nonlinear component is introduced. Therefore, a preprocessing method such as pre-distortion (for example, digital pre-distortion) is widely used. Preprocessing means processing an input signal of a power amplifier in advance, and the processing and nonlinear impact on the power amplifier cancel each other, so that an output signal of the power amplifier is linearly amplified.

In a communication system, how to perform accurate preprocessing to improve working efficiency of a communication device is a problem that needs to be resolved.

## SUMMARY

Embodiments of this application provide a method and an apparatus for updating a preprocessing parameter, to improve preprocessing accuracy, thereby improving working efficiency of a communication device.

First, it should be noted that u, x, y, y', d, and z in the following first signal u, second signal x, third signal y, fourth signal y', fifth signal d, and sixth signal z are all used to distinguish between signals, and should not constitute a limitation on the solution.

According to a first aspect, a method for updating a preprocessing parameter is provided. First, a first apparatus sends a third signal y to a second apparatus, where the third signal y is a signal obtained by performing preprocessing and power amplification on a first signal u by using a first preprocessing parameter. The third signal y changes to a fourth signal y' after passing through a channel between the first apparatus and the second apparatus. Next, the first apparatus receives a first indication from the second apparatus, where the first indication indicates an updated preprocessing parameter, the updated preprocessing parameter is obtained based on a fifth signal d, the fifth signal d is a signal obtained by performing channel estimation and channel equalization on the fourth signal y', and the fourth signal y' is a signal obtained after the third signal y passes through the channel.

In the first aspect, channel estimation and channel equalization can eliminate a linear part of the fourth signal y'. When the updated preprocessing parameter is estimated, only impact of a nonlinear part on the signal is considered. Compared with considering impact of both the linear part and the nonlinear part on the signal, an optimal preprocessing parameter can be obtained more efficiently and accurately, to implement accurate preprocessing and improve working efficiency of a communication device.

Optionally, channel estimation and channel equalization may be performed by using the fourth signal y' in frequency domain or time domain.

Optionally, the fifth signal d is a signal obtained by performing channel estimation and channel equalization on the fourth signal y' and the fourth signal y' is transformed to time domain in a resource mapping manner the same as that used by the first apparatus.

In a possible implementation, the first indication may directly indicate the updated preprocessing parameter, or may indirectly indicate the updated preprocessing parameter. For example, the first indication indicates a changed value of the preprocessing parameter. It may alternatively be understood that the first indication includes information about a changed value of the preprocessing parameter. The changed value may be obtained by using the information, and the updated preprocessing parameter may be determined based on the changed value and the first preprocessing parameter.

For example, the change value of the preprocessing parameter is a difference between the updated preprocessing parameter and the first preprocessing parameter, and the change value is a positive real number, a negative real number, or a complex number. First preprocessing parameter + Changed value of the preprocessing parameter = Updated preprocessing parameter. Alternatively, a learning rate is preset. First preprocessing parameter + Changed value of the preprocessing parameter * Learning rate = Updated preprocessing parameter.

In addition, the changed value of the preprocessing parameter occupies a relatively small quantity of bits, to reduce signaling overheads.

In a possible implementation, the first apparatus may further send configuration information to the second apparatus, where the configuration information indicates the first preprocessing parameter or a first parameter related to the preprocessing (the first preprocessing parameter).

The configuration process usually occurs in a first update process in a plurality of update processes (a plurality of iterations). In the first update process, the first preprocessing parameter may also be referred to as an initial preprocessing parameter. For a subsequent iteration process, the first apparatus generally does not need to configure the first preprocessing parameter for the second apparatus. Certainly, for the first iteration, the second apparatus may also learn of the initial preprocessing parameter or the first parameter related to the preprocessing (the initial preprocessing parameter) in advance, and the first apparatus does not need to configure the first preprocessing parameter for the second apparatus.

Compared with the first preprocessing parameter, the first parameter related to the preprocessing has a relatively small data amount, and the first preprocessing parameter may be derived based on the related first parameter. The related first parameter may be a first parameter related to the first preprocessing parameter, for example, a part of parameters in the first preprocessing parameter.

In a possible implementation, the first apparatus may receive a second indication from the second apparatus, where the second indication is used to trigger update of the preprocessing parameter.

The second indication may be used to indicate performance deterioration, and update of the preprocessing parameter is triggered by performance deterioration. The performance is, for example, error vector magnitude (error vector magnitude, EVM), adjacent channel leakage ratio (adjacent channel leakage ratio, ACLR), or the like. A larger EVM or a larger ACLR indicates poorer performance.

In a possible implementation, the first apparatus may further update the first preprocessing parameter by using the updated preprocessing parameter for a next update process (iterative training) or a subsequent use.

For example, the first apparatus may further preprocess the first signal u or a new input signal u by using the updated preprocessing parameter.

According to a second aspect, a method for updating a preprocessing parameter is provided. A second apparatus receives a fourth signal y' from a first apparatus, where the fourth signal y' is a signal obtained after a third signal y passes through a channel between the first apparatus and the second apparatus, and the third signal y is a signal obtained by performing preprocessing and power amplification on a first signal u by using a first preprocessing parameter. Then, the second apparatus sends a first indication to the first apparatus, where the first indication indicates an updated preprocessing parameter, the updated preprocessing parameter is obtained based on a fifth signal d, and the fifth signal d is a signal obtained by performing channel estimation and channel equalization on the fourth signal y'.

In the second aspect, channel estimation and channel equalization can eliminate a linear part of the fourth signal y'. When the updated preprocessing parameter is estimated, only impact of a nonlinear part on the signal is considered. Compared with considering impact of both the linear part and the nonlinear part on the signal, an optimal preprocessing parameter can be obtained more efficiently and accurately, to implement accurate preprocessing and improve working efficiency of a communication device.

Optionally, channel estimation and channel equalization may be performed by using the fourth signal y' in frequency domain or time domain.

Optionally, the fifth signal d is a signal obtained by performing channel estimation and channel equalization on the fourth signal y' and the fourth signal y' is transformed to time domain in a resource mapping manner the same as that used by the first apparatus.

In a possible implementation, the third signal y is specifically: a signal obtained by performing preprocessing on the first signal u by using the first preprocessing parameter, to obtain a second signal x; and the second signal x is input to a power amplifier PA. The updated preprocessing parameter is determined based on the second signal x and a sixth signal z, where the second signal x is obtained by performing preprocessing on the first signal u by using the first preprocessing parameter, the sixth signal z is obtained by performing post-processing on the fifth signal d, and a post-processing parameter used for the post-processing is the same as the first preprocessing parameter.

In a possible implementation, the fifth signal d is a signal obtained by performing fast Fourier transform (fast fourier transform, FFT), channel equalization, constellation point-based normalization, resource re-mapping in a resource mapping manner the same as that used by the first apparatus, and inverse fast fourier transform (inverse fast fourier transform, IFFT) on the fourth signal y'.

In a possible implementation, the first indication may directly indicate the updated preprocessing parameter, or may indirectly indicate the updated preprocessing parameter. For example, the first indication indicates a changed value of the preprocessing parameter. It may alternatively be understood that the first indication includes information about a changed value of the preprocessing parameter. The changed value may be obtained by using the information, and the updated preprocessing parameter may be determined based on the changed value and the first preprocessing parameter.

For example, the change value of the preprocessing parameter is a difference between the updated preprocessing parameter and the first preprocessing parameter, and the change value is a positive real number, a negative real number, or a complex number. First preprocessing parameter+Changed value of the preprocessing parameter=Updated preprocessing parameter. Alternatively, a learning rate is preset. First preprocessing parameter+Changed value of the preprocessing parameter*Learning rate=Updated preprocessing parameter.

In addition, the changed value of the preprocessing parameter occupies a relatively small quantity of bits, to reduce signaling overheads.

In a possible implementation, the second apparatus may further receive configuration information from the first apparatus, where the configuration information may indicate the first preprocessing parameter. That is, the first preprocessing parameter is configured by the first apparatus. Alternatively, the second apparatus may learn of the initial first preprocessing parameter in advance. For example, the first preprocessing parameter may be pre-specified in a protocol. Alternatively, the first preprocessing parameter is derived based on a first parameter related to the preprocessing (the first preprocessing parameter). For example, the configuration information may indicate the first parameter related to the preprocessing (the first preprocessing parameter). Alternatively, the second apparatus may learn of the initial first parameter related to the preprocessing (the first preprocessing parameter) in advance. For example, the first parameter related to the preprocessing (the first preprocessing parameter) may be pre-specified in a protocol.

A process in which the first apparatus configures the first preprocessing parameter for the second apparatus usually occurs in a first update process (iteration) in a plurality of update processes (a plurality of iterations), and the first preprocessing parameter may also be referred to as an initial preprocessing parameter. For a subsequent iteration process, the first apparatus generally does not need to configure the first preprocessing parameter for the second apparatus. Certainly, for the first iteration, the second apparatus may also learn of the initial preprocessing parameter or the first parameter related to the preprocessing (the initial preprocessing parameter) in advance, and the first apparatus does not need to configure the first preprocessing parameter for the second apparatus.

Compared with the first preprocessing parameter, the first parameter related to the preprocessing has a relatively small data amount, and the first preprocessing parameter may be derived based on the related first parameter. The related first parameter may be a first parameter related to the first preprocessing parameter, for example, a part of parameters in the first preprocessing parameter.

In a possible implementation, the first signal u is preconfigured (pre-specified in a protocol), or the first signal u is obtained by decoding, re-encoding, and modulating the fourth signal y'.

In a possible implementation, the second apparatus may send a second indication to the first apparatus, where the second indication is used to trigger update of the preprocessing parameter.

The second indication may be used to indicate performance deterioration, and the learning of the preprocessing parameter is triggered by performance deterioration. The performance is, for example, EVM, ACLR, and the like.

According to a third aspect, a method for updating a preprocessing parameter is provided. First, a first apparatus sends a third signal y to a second apparatus, where the third signal y is a signal obtained by performing preprocessing and power amplification on a first signal u by using a first preprocessing parameter. The third signal y changes to a fourth signal y' after passing through a channel between the first apparatus and the second apparatus. Next, the first apparatus receives a performance indicator value from the second apparatus, where the performance indicator value is obtained based on the fourth signal y'. Then, the first apparatus determines an updated preprocessing parameter by using deep reinforcement learning and using the performance indicator value as a reward value.

In a possible implementation, the performance indicator is an EVM and/or an ACLR.

In a possible implementation, the first apparatus may receive a second indication from the second apparatus, where the second indication is used to trigger update of the preprocessing parameter.

According to a fourth aspect, a method for updating a preprocessing parameter is provided. A second apparatus receives a fourth signal y' from a first apparatus, where the fourth signal y' is a signal obtained after a third signal y passes through a channel between the first apparatus and the second apparatus, and the third signal y is a signal obtained by performing preprocessing and power amplification on a first signal u by using a first preprocessing parameter. Then, the second apparatus sends a first indication to the first apparatus, where the first indication indicates an updated preprocessing parameter, the updated preprocessing parameter is obtained by using deep reinforcement learning and by using a performance indicator value as a reward value, and the performance indicator is obtained based on the fourth signal y'.

In a possible implementation, the performance indicator is an EVM and/or an ACLR.

In a possible implementation, the first indication may directly indicate the updated preprocessing parameter, or may indirectly indicate the updated preprocessing parameter. For example, the first indication indicates a changed value of the preprocessing parameter. It may alternatively be understood that the first indication includes information about a changed value of the preprocessing parameter. The changed value may be obtained by using the information, and the updated preprocessing parameter may be determined based on the changed value and the first preprocessing parameter.

In a possible implementation, the second apparatus may send a second indication to the first apparatus, where the second indication is used to trigger update of the preprocessing parameter.

According to a fifth aspect, a communication apparatus is provided. The apparatus has a function of implementing the foregoing aspects and any one of the possible implementations of the foregoing aspects. The function may be implemented by hardware, or may be implemented by hardware by executing corresponding software. The hardware or software includes one or more functional modules corresponding to the foregoing function.

For example, when the apparatus has the function of implementing the first aspect and any one of the possible implementations of the first aspect, the apparatus includes:

a sending module, configured to send a third signal y to a second apparatus, where the third signal y is a signal obtained by performing preprocessing and power amplification on a first signal u by using a first preprocessing parameter; and

a receiving module, configured to receive a first indication from the second apparatus, where the first indication indicates an updated preprocessing parameter, the updated preprocessing parameter is obtained based on a fifth signal d, the fifth signal d is a signal obtained by performing channel estimation and channel equalization by using a fourth signal y', and the fourth signal y' is a signal obtained after the third signal y passes through the channel.

In a possible implementation, the sending module is further configured to send configuration information to the second apparatus, where the configuration information indicates the first preprocessing parameter or a first parameter related to the preprocessing.

In a possible implementation, the receiving module is configured to receive a second indication from the second apparatus, where the second indication is used to trigger update of the preprocessing parameter.

In a possible implementation, the apparatus further includes a processing module, configured to preprocess the first signal u or a new input signal by using the updated preprocessing parameter.

For example, when the apparatus has the function of implementing the second aspect and any one of the possible implementations of the second aspect, the apparatus includes:

a receiving module, configured to receive a fourth signal y' from a first apparatus, where the fourth signal y' is a signal obtained after a third signal y passes through a channel between the first apparatus and the apparatus, and the third signal y is a signal obtained by performing preprocessing and power amplification on a first signal u by using a first preprocessing parameter; and

a sending module, configured to send a first indication to the first apparatus, where the first indication indicates an updated preprocessing parameter, the updated preprocessing parameter is obtained based on a fifth signal d, and the fifth signal d is a signal obtained by performing channel estimation and channel equalization by using the fourth signal y'.

In a possible implementation, the sending module is further configured to send a second indication to the first apparatus, where the second indication is used to trigger update of the preprocessing parameter.

According to a sixth aspect, a communication apparatus is provided, including a processor, and optionally, further including a memory. The processor is coupled to the memory. The memory is configured to store computer programs or instructions. The processor is configured to execute some or all of the computer programs or instructions in the memory, and when the some or all of the computer programs or instructions are executed, the processor is configured to implement a function in the method according to any one of the first aspect to the fourth aspect or the possible implementations of the first aspect to the fourth aspect.

In a possible implementation, the apparatus may further include a transceiver, and the transceiver is configured to transmit a signal processed by the processor, or receive a signal input into the processor. The transceiver may perform a sending action or a receiving action performed in the method according to any one of the first aspect to the fourth aspect and the possible implementations of the first aspect to the fourth aspect.

According to a seventh aspect, this application provides a chip system. The chip system includes one or more processors (which may also be referred to as processing circuits), the processor is electrically coupled to a memory (which may also be referred to as a storage medium), the memory may be located in the chip system, or may not be located in the chip system, and the memory is configured to store computer programs or instructions. The processor is configured to execute some or all computer programs or instructions in the memory, and when the some or all computer programs or instructions are executed, the processor is configured to implement a function in the method according to any one of the first aspect to the fourth aspect and the possible implementations of the first aspect to the fourth aspect.

In a possible implementation, the chip system may further include an input/output interface (which may also be referred to as a communication interface). The input/output interface is configured to output a signal processed by the processor, or receive a signal input to the processor. The input/output interface may perform a sending action or a receiving action performed in the method according to any one of the first aspect to the fourth aspect and the possible implementations of the first aspect to the fourth aspect. Specifically, the output interface performs a sending action, and the input interface performs a receiving action.

In a possible implementation, the chip system may include a chip, or may include a chip and another discrete device.

According to an eighth aspect, a computer-readable storage medium is provided, configured to store a computer program. The computer program includes instructions for implementing a function in any one of the first aspect to the fourth aspect and the possible implementations of the first aspect to the fourth aspect.

Alternatively, a computer-readable storage medium is configured to store a computer program. When the computer program is executed by a computer, the computer is enabled to perform the method according to any one of the first aspect to the fourth aspect and the possible implementations of the first aspect to the fourth aspect.

According to a ninth aspect, a computer program product is provided. The computer program product includes computer programs or instructions. When the computer programs or the instructions are run on a computer, the computer is enabled to perform the method according to any one of the first aspect to the fourth aspect and the possible implementations of the first aspect to the fourth aspect.

According to a tenth aspect, a communication system is provided. The communication system includes the first apparatus for performing the method according to any one of the first aspect and the possible implementations of the first aspect and the second apparatus for performing the method according to any one of the second aspect and the possible implementations of the second aspect.

For technical effects of the fifth aspect to the tenth aspect, refer to the descriptions of the first aspect to the fourth aspect. Details are not described again.

**BRIEF DESCRIPTION OF DRAWINGS**

FIG. 1 is a schematic diagram of an architecture of a communication system according to an embodiment of this application;

FIG. 2 is a schematic flowchart of updating a pre-distortion parameter by using an indirect learning architecture according to an embodiment of this application;

FIG. 3 is a schematic interaction diagram of updating a preprocessing parameter according to an embodiment of this application;

FIG. 4 is a schematic interaction diagram of updating a preprocessing parameter according to an embodiment of this application;

FIG. 5 is a schematic flowchart of updating a preprocessing parameter by using an equalized learning architecture according to an embodiment of this application;

FIG. 6a is a schematic diagram of a change of an error vector magnitude EVM with a training round according to an embodiment of this application;

FIG. 6b is a schematic diagram of a change of an error vector magnitude EVM with a training round according to an embodiment of this application;

FIG. 7a is a schematic diagram of a neural network according to an embodiment of this application;

FIG. 7b is a schematic diagram of reinforcement learning according to an embodiment of this application;

FIG. 8 is a schematic interaction diagram of updating a preprocessing parameter according to an embodiment of this application;

FIG. 9 is a schematic interaction diagram of updating a preprocessing parameter according to an embodiment of this application;

FIG. 10 is a diagram of a structure of an apparatus for updating a preprocessing parameter according to an embodiment of this application; and

FIG. 11 is a diagram of a structure of an apparatus for updating a preprocessing parameter according to an embodiment of this application.

**DESCRIPTION OF EMBODIMENTS**

For ease of understanding embodiments of this application, the following describes some terms in embodiments of this application, to help a person skilled in the art have a better understanding.

(1) Pre-distortion: A system whose feature is opposite to nonlinear distortion of a system including a power amplifier is added to perform mutual compensation. Pre-distortion may be classified into two types: digital pre-distortion and analog pre-distortion. The pre-distortion in this application may be digital pre-distortion (digital pre-distortion, DPD). A pre-distortion principle is as follows: A pre-distortion element is cascaded to a power amplifier, and a nonlinear distortion function of the pre-distortion element is opposite to a nonlinear distortion function of the power amplifier. The two nonlinear distortion functions are combined to achieve linear and non-distortion objectives. A parameter used in a pre-distortion process is referred to as a pre-distortion parameter.

A digital pre-distortion parameter may be in a form of a memory polynomial, or may be in a form of a neural network.

For example, when a pre-distortion signal of an input signal at a current sampling moment is calculated, due to a memory effect, the input signal at the current sampling moment and input signals at a plurality of past sampling moments may be input to a formula of a memory polynomial or a neural network, and an output of the formula or the neural network is the pre-distortion signal of the input signal at the current sampling moment.

For example, the memory polynomial is:

$$f(x) = \sum_{n=0} \sum_{m=1} k_{nm}(x_{t-n})^m$$

$k_{nm}$ is a coefficient of the memory polynomial, $k_{nm}$ may be a complex number, t-n represents a current sampling moment or a past sampling moment of an input signal, n represents a memory depth, and m represents a high-order term of the input signal.

Parameters in a form of the memory polynomial include at least one of the following: the coefficient $k_{nm}$ of the memory polynomial, the memory depth n, and the high-order term m of the input signal.

Parameters in a form of the neural network include at least one of the following: a structural parameter, a weight value, and the like of the neural network. The structural parameter is, for example, a quantity of layers of neurons, or a quantity of neurons at each layer.

(2) Channel equalization (channel equalization) is an anti-fading measure taken to improve transmission performance of a communication system in a fading channel. The channel equalization is mainly used to eliminate or reduce inter-symbol interference (inter-symbol interference, ISI) caused by multipath delay in broadband communication. The principle is to compensate for the channel or the entire transmission system features. For features of a constant channel parameter or a variable parameter, data rates are different, and there are a plurality of equalization structures. There are two types of equalization: linear equalization and nonlinear equalization.

(3) Error vector magnitude (error vector magnitude, EVM): An error vector (including an amplitude vector and a phase vector) is a vector difference between an ideal error-free reference signal and an actual transmit signal at a specific moment.

(4) Adjacent channel leakage ratio (adjacent channel leakage ratio, ACLR): The adjacent channel leakage is used to measure impact of a radio frequency component on a channel outside a primary working frequency, or referred to as an out-of-band radiation feature. Smaller impact indicates better performance.

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and do not constitute any limitation on the technical solutions provided in embodiments of this application.

The technical solutions in embodiments of this application may be applied to various communication systems, for example, a satellite communication system and a conventional mobile communication system. The satellite communication system may be integrated with the conventional mobile communication system (that is, a terrestrial communication system). For example, the communication system is a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, a 6th generation (6th generation, 6G) system, or another future communication system. The communication system further supports a communication system integrating a plurality of wireless technologies, for example, may also be applied to a system that integrates a non-terrestrial network (non-terrestrial network, NTN) and a ground mobile communication network, such as an unmanned aerial vehicle, a satellite communication system, and high altitude platform station (high altitude platform station, HAPS) communication.

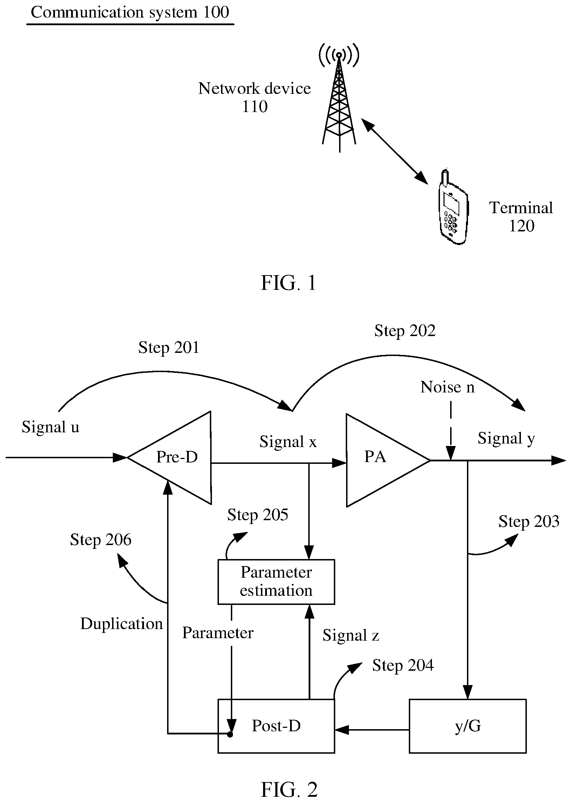

FIG. 1 is an example of a communication system applicable to an embodiment of this application. Refer to FIG. 1. The communication system 100 includes at least one network device 110 and at least one terminal 120.

The network device 110 in this application may be an evolved NodeB (evolved NodeB, eNB or eNodeB) in LTE, or a base station in a 5G network, a broadband network gateway (broadband network gateway, BNG), an aggregation switch, an access device not in a 3rd generation partnership project (3rd generation partnership project, 3GPP), or the like. This is not specifically limited in this embodiment of this application. Optionally, the base station in this embodiment of this application may include various forms of base stations, for example, a macro base station, a micro base station (also referred to as a small cell), a relay station, an access point, a next-generation base station (gNodeB, gNB), a transmission reception point (transmitting and receiving point, TRP), a transmission point (transmitting point, TP), a mobile switching center, a device that functions as a base station in device-to-device (Device-to-Device, D2D) communication, vehicle-to-everything (vehicle-to-everything, V2X) communication, machine-to-machine (machine-to-machine, M2M) communication, and internet of things (Internet of Things) communication, and the like. This is not specifically limited in this embodiment of this application.

The network device may communicate and interact with a core network device, to provide a communication service for the terminal device. For example, the core network device is a device in a 5G core network (core network, CN). As a bearer network, the core network provides an interface to a data network, provides communication connection, authentication, management, and policy control for user equipment (user equipment, UE), carries data services, and the like.

The terminal 120 mentioned in this embodiment of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device, another processing device connected to a wireless modem, an in-vehicle device, a communication device carried on a high-altitude aircraft, a wearable device, an unmanned aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

For ease of understanding embodiments of this application, the following describes an application scenario of this application. A network architecture and a service scenario described in embodiments of this application are intended to describe the technical solutions in embodiments of this application more clearly, and do not constitute any limitation on the technical solutions provided in embodiments of this application. A person of ordinary skill in the art may know that, as a new service scenario emerges, the technical solutions provided in embodiments of this application are also applicable to a similar technical problem.

This application may be applied to a scenario of a component having a nonlinear feature in a communication link. The communication link may be wired communication or wireless communication. Wireless communication scenarios include cellular network communication, satellite communication, and the like. A communication device, such as a cellular network base station, a satellite, or a ground satellite device, may all have a nonlinear feature, and may perform preprocessing (for example, pre-distortion processing), to cancel nonlinear impact of the device having the nonlinear feature as much as possible.

The following describes a specific example by using an example in which a device having a nonlinear feature is a power amplifier PA and the preprocessing is digital pre-distortion processing.

To offset free space propagation losses, the power amplifier is widely used in a communication system (especially long-distance communication system), and the function of the power amplifier is to amplify a signal. To obtain a relatively large power output, the power amplifier usually works near a nonlinear region. When amplifying a signal, the power amplifier causes nonlinear distortion to the signal. The nonlinear distortion may include high-order harmonic, broadband spurious, intermodulation distortion, and the like. In addition, as a bandwidth increases, a memory effect of the power amplifier (that is, a current output of the power amplifier depends on both an input signal at a current sampling moment and an input signal at a past moment) is also more severe. The nonlinear distortion caused by nonlinearity of the power amplifier may cause an increase in an in-band bit error rate and an out-of-band spectrum extension.

To avoid such a problem, a digital pre-distortion DPD technology is usually used to compensate for the nonlinear distortion of the power amplifier. To ensure performance of compensating for the nonlinear distortion of the power amplifier with nonlinearity, features of a digital pre-distorter should be opposite to the nonlinear distortion of the power amplifier. These features are accurately described by establishing a nonlinear model of the power amplifier.

The model of the power amplifier may be simplified into the following form:

$$y = g(f(x)).$$

The output y of the power amplifier is a function of the input x, the function f represents the nonlinear model of the power amplifier, and the function g represents a linear amplification model of the power amplifier.

The function f may meet a form of the following formula, and the formula may be considered as a memory polynomial:

$$f(x) = \sum_{n=0} \sum_{m=1} k1_{nm}(x_{t-n})^m$$

$k1_{nm}$, is a coefficient of the memory polynomial, $k1_{nm}$ may be a complex number, t-n represents a current sampling moment or a past sampling moment of an input signal, x represents the input signal, n represents a memory depth of a nonlinear model, m represents a high-order term of the input signal, n is an integer greater than or equal to 0, m is an integer greater than or equal to 1, t-0 is the current sampling moment of the input signal, t-1 is a previous sampling moment of the input signal, and t-2 is a previous sampling moment of the previous sampling moment of the input signal.

Similarly, to compensate for a nonlinear feature of the power amplifier, a digital pre-distortion model is also in the form of the foregoing memory polynomial. For example, the digital pre-distortion model meets the following form:

$$f(x) = \sum_{n=0} \sum_{m=1} k2_{nm}(x_{t-n})^m$$

Values of parameters such as n, m, t-n, and $k2_{nm}$ may be used as digital pre-distortion parameters. A calculation result of the digital pre-distortion model is opposite to a calculation result of the nonlinear model of the functional amplifier as much as possible, to implement compensation for the nonlinear distortion.

When $k2_{01} = 1$, and the other values $k2_{nm}$ are all 0, f(x)=x, the pre-distorter does not perform any processing on the input signal x at the current sampling moment, and the parameter combination ($k2_{01} = 1$, and the other values $k2_{nm}$ are all 0) may be used as initial values of the digital pre-distortion parameters. Nonlinearity is increased a bit more from no processing is performed.

The input signal of the power amplifier PA is processed in advance by using the digital pre-distortion DPD. In the processing process, some or all of nonlinearity of the power amplifier PA can be canceled, so that the output signal and the input signal of the power amplifier PA are linearly amplified. It may be understood that the power amplifier PA is merely an example, and the communication system further includes another device having a nonlinear feature. This application is described by using a power amplifier as an example. It may be understood that another device having a nonlinear feature may also be included in the protection scope of this application.

The following describes a manner of updating a pre-distortion parameter. The manner is shown as follows.

Pre-distortion processing is performed on an input signal u by using a current pre-distortion parameter, and then power amplification is performed on a signal obtained by the pre-distortion processing. An objective of the pre-distortion processing is to make the input signal linearly amplified, that is, a signal y/G obtained by dividing the signal obtained by power amplification by an amplification multiple is the same as the input signal u. When y/G is the same as the input signal u, signals obtained by processing y/G and the input signal u by using a same parameter are also the same. Based on this objective, the current pre-distortion parameter may be updated by using an error between a signal z and a signal x. The signal z is a signal obtained by processing y/G by using the current pre-distortion parameter, and the signal x is a signal obtained by performing pre-distortion processing on the input signal by using the current pre-distortion parameter.

With reference to FIG. 2, a manner of updating a preprocessing parameter is described. The update manner shown in FIG. 2 may be referred to as an indirect learning architecture (indirect learning architecture, ILA).

201: Pre-distortion (pre-distortion, Pre-D, PD) processing is performed on an input signal u, to obtain a signal x.

202: The signal x is processed by a power amplifier PA, to obtain a signal y. The signal y can be transmitted.

A linear gain of the power amplifier PA is G. If there is no nonlinear distortion, y=x*G; or if there is nonlinear distortion, y is not equal to x*G, and a purpose of pre-distortion processing is to make y=u*G.

203: The signal y is divided by the gain G to obtain y/G.

If there is no nonlinear distortion, u=y/G; or if there is nonlinear distortion, u is not equal to y/G.

204: Post-distortion (post-D) processing is performed on y/G, to obtain a signal z.

205: An error e is obtained by subtracting z from x, and then a post-distortion parameter used in the post-distortion processing is re-estimated, so that a square of e is reduced.

206: The post-distortion parameter is copied to a pre-distortion parameter, and the post-distortion parameter is the same as the pre-distortion parameter.

Step 201 to step 206 are repeated for a plurality of times until an end condition is met.

The end condition may be: a. A preset quantity of repetitions Xn is reached; b. An average value of change values of the pre-distortion parameter is less than a preset value Xo; and c. An absolute value of the error e is less than a preset value Xe.

In the foregoing solution, u=y/G (which may also be understood as that u and y are completely linear) is used as an objective to update the pre-distortion parameter. When nonlinearity of the PA is relatively strong (for example, a nonlinear order is relatively high, for example, higher than a third order or a fifth order), a manner of dividing y by G is used, and u=y/G cannot be obtained by updating for many times.

Based on this, this application further provides a method for updating a pre-distortion parameter. Specifically, channel estimation and channel equalization are first performed on an output signal y of the PA, and then the output signal y is used for update of a preprocessing parameter (for example, a digital pre-distortion parameter). After the channel that the signal y passes through is estimated, channel equalization is performed on y by using an estimated channel value. During channel equalization processing, a linear part of the output signal y of the PA may be filtered out. When the updated preprocessing parameter is estimated, only impact of a nonlinear part on the signal is considered. Compared with considering impact of both the linear part and the nonlinear part on the signal, a relatively optimal preprocessing parameter may be obtained even in a strong nonlinearity scenario. An optimal preprocessing parameter can be obtained more efficiently and accurately, to implement accurate preprocessing and improve working efficiency of a communication device.

It should be noted that the channel herein is not an air interface channel in a narrow sense, and any transform of a signal through a component and/or an air interface may be seen as a channel. Alternatively, the channel herein is a channel for transmitting the signal in a communication system, may also be referred to as a channel, or the like, and is formed by a transmission medium that is passed through when the signal is transmitted from a signal transmitter to a signal receiver. In a broad sense, the channel includes not only a transmission medium, but also a related device for transmitting the signal.

In addition, it may be understood that, in the technical solution of this application, the updated preprocessing parameter can be estimated after channel equalization processing. Therefore, different from the indirect learning architecture ILA in which the updated preprocessing parameter can be estimated only at a transmitter in which the PA is located, in the technical solution of this application, the preprocessing parameter may be estimated at a receiver.

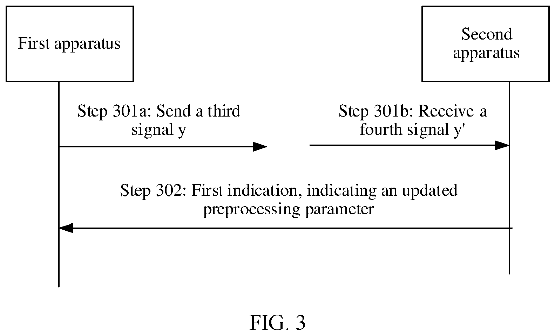

As shown in FIG. 3, a process of updating a preprocessing parameter is described by using a first apparatus as a transmitter and a second apparatus as a receiver. The first apparatus may be a satellite network device, for example, a satellite base station. The second apparatus may be a terrestrial network device, for example, a terrestrial base station. Alternatively, both the first apparatus and the second apparatus are terrestrial devices. For example, the first apparatus is a terminal, and the second apparatus is a network device; or the first apparatus is a network device, and the second apparatus is a terminal.

Step 301a: The first apparatus sends a third signal y to the second apparatus.

In an example, the third signal y is a signal obtained by performing preprocessing and power amplification on a first signal u by using a first preprocessing parameter. Power amplification may be performed by using a power amplifier. For example, the third signal y is a signal obtained by performing preprocessing on the first signal u by using the first preprocessing parameter, to obtain a second signal x, and the second signal x is input to the power amplifier PA.

The preprocessing is, for example, pre-distortion processing, and the pre-distortion is, for example, digital pre-distortion.

The signal y changes to y' after passing through a channel (a transmission channel in a communication system) between the first apparatus and the second apparatus.

Communication between the first apparatus and the second apparatus may be wired communication or wireless communication. When wireless communication is used, the signal y sent by the first apparatus arrives at the second apparatus through an air interface channel.

In a possible implementation, the first signal u is a signal including a reference signal, the first signal is an input signal, and the reference signal may be used for channel estimation. For example, in an orthogonal frequency-division multiplexing (orthogonal frequency-division multiplexing, OFDM) system, when a system waveform is an OFDM waveform, the first signal u is a signal on which OFDM modulation is performed. For example, the first signal u is a time-domain signal obtained by OFDM modulation.

In an example, the first signal u is obtained by performing processing such as encoding, modulation, resource mapping, and transformation to time domain on an original to-be-sent bit. For example, the transformation to time domain includes, for example, inverse fast fourier transform (inverse fast fourier transform, IFFT), and optionally, further includes zero padding (padding), cyclic prefix (cyclic prefix, CP) addition, and the like.

In the OFDM system, a reference signal is placed on a time-frequency resource (for example, a resource element (resource element, RE)), and a remaining part is a useful data signal. A placement process may be referred to as resource mapping. After the resource mapping, the first signal u is obtained by the transformation to time domain. A channel can be estimated only at a time-frequency resource location at which a reference signal is placed.

For example, the reference signal in a 5G NR system may be a channel state information reference signal (channel state information reference signal, CSI-RS), a demodulation reference signal (demodulation reference signal, DMRS), or a sounding reference signal (sounding reference signal, SRS). A principle and a usage manner of the reference signal in this application are the same as those of a reference signal in an existing communication system, and both are used for channel estimation.

The reference signal is a "pilot" signal, which is a known signal used for channel estimation or channel sounding. The known signal indicates that a frequency domain location of the signal is known, a time domain location of the signal is known, a symbol (content) included in the signal is known, and power used for sending is known.

Channel estimation is a process of estimating a model parameter of an assumed channel model from received data.

In OFDM, a channel is divided into several orthogonal sub-channels, converts highspeed data signals into parallel low-speed data subflows, and modulates the low-speed data subflows to each sub-channel for transmission. The orthogonal signals may be separated by using a conventional technology at the receiver, so that mutual interference between sub-channels (that is, inter-symbol interference ISI) may be reduced. A signal bandwidth on each sub-channel is less than a coherence bandwidth of the channel. Therefore, each sub-channel may be considered to undergo flat fading, and inter-symbol interference ISI may be eliminated. In addition, because the bandwidth of each sub-channel is only a small part of the bandwidth of the original channel, channel equalization becomes relatively easy. The coherence bandwidth may be understood as follows: Within a range of the coherence bandwidth, a channel feature (for example, a phase and a gain) is almost constant.

In ab initial update of the preprocessing parameter, the first preprocessing parameter may also be referred to as an initial preprocessing parameter. The initial preprocessing parameter may be specified in a protocol. Alternatively, a plurality of preprocessing parameters is specified in a protocol, and the first apparatus may select one preprocessing parameter from the plurality of preprocessing parameters as the initial preprocessing parameter. Alternatively, a first parameter related to each preprocessing parameter is specified in a protocol, the first apparatus may select one of a plurality of first parameters, and the first apparatus may derive the initial preprocessing parameter based on the related first parameter. For example, the related first parameter is a part of the preprocessing parameter.

An example in which the preprocessing parameter is in a form of a memory polynomial is used for description.

For example, it is specified in the protocol that the initial preprocessing parameter is $k_{01} = 1$, and other parameters $k_{nm}$ are all 0; or $k_{01} = 0.9$, and other parameters $k_{nm}$ are all 0.

Alternatively, it is specified in the protocol that a plurality of preprocessing parameters include: $k_{01} = 1$, and other parameters $k_{nm}$ are all 0; or $k_{01} = 0.9$, and other parameters $k_{nm}$ are all 0; or $k_{01} = 0.8$, and other parameters $k_{nm}$ are all 0. The first apparatus may select one of the plurality of preprocessing parameters as the initial preprocessing parameter.

For another example, the related first parameter may be a maximum value of a memory depth n, and/or a maximum value of a higher-order term m. For example, the maximum value of n is 4 or 6, and the maximum value of m is 7 or 8.

An example in which the preprocessing parameter is in a form of a neural network is used for description.

For example, it is specified in the protocol that the initial preprocessing parameter (a neural network parameter, without considering a weight value) is [128, 256, 256, 2], where a quantity of elements represents a quantity of layers of the neural network, a first element represents a quantity of neurons at an input layer, a last element represents a quantity of neurons at an output layer, and a middle element represents a quantity of neurons at an intermediate hidden layer. For example, [128, 256, 256, 2] indicates that there are four layers of a neural network, a quantity of neurons at an input layer is 128, a quantity of neurons at an output layer is 2, and quantities of neurons at two intermediate hidden layers are 256.

For another example, it is specified in the protocol that the preprocessing parameter (a neural network parameter, without considering a weight value) includes [128, 256, 256, 2], [64, 128, 256, 2], and [128, 128, 256, 4]. The first apparatus may select one of the plurality of preprocessing parameters as the initial preprocessing parameter.

For another example, different neural network structures correspond to different weight values, and a neural network parameter may also be considered as a first parameter related to the preprocessing parameter. The first apparatus may select one of a plurality of first parameters, find a corresponding weight value based on the first parameter, and use the selected first parameter and the found weight value as the initial preprocessing parameter.

In an example, the first apparatus maintains a first mapping relationship, where the first mapping relationship is a correspondence between an index and a preprocessing parameter, or a correspondence between an index and a first parameter. Optionally, the first mapping relationship is represented in a form of a correspondence table. Subsequently, the first apparatus may implicitly indicate, to the second apparatus by using an index, the initial preprocessing parameter or the first parameter related to the initial preprocessing parameter.

Step 301b: The second apparatus receives a fourth signal y' from the first apparatus, where the fourth signal y' is a signal obtained after the third signal y passes through a channel between the first apparatus and the second apparatus.

After receiving the fourth signal y', the second apparatus may determine (estimate) an updated preprocessing parameter or a changed value of the preprocessing parameter based on the fourth signal y'.

Because an ultimate objective is to obtain an optimal preprocessing parameter instead of modeling the PA, more processing may be performed on an input signal obtained by post-distortion (post-D) processing based on the output signal y of the PA, provided that a nonlinear feature of the PA can be retained (a nonlinear feature needs to be learned, and a linear feature does not need to be learned). More processing herein is, for example, channel estimation and channel equalization. Channel estimation and channel equalization can eliminate a linear part of the fourth signal y'. When the updated preprocessing parameter is estimated, only impact of a nonlinear part on the signal is considered. Compared with considering impact of both the linear part and the nonlinear part on the signal, an optimal preprocessing parameter can be obtained more efficiently and accurately, to implement accurate preprocessing and improve working efficiency of a communication device.

In an example, the second apparatus may perform processing such as channel estimation and channel equalization by using the fourth signal y', to obtain a fifth signal d. Then, an updated preprocessing parameter or a changed value of the preprocessing parameter is obtained based on the fifth signal d.

The following describes in detail a related process of performing processing such as channel estimation and channel equalization by using the fourth signal y' to obtain the fifth signal d.

Optionally, channel estimation and channel equalization may be performed by using the fourth signal y' in frequency domain or time domain.

The following describes a process of filtering out a linear part of the fourth signal y' through channel estimation and signal equalization.

The model of the power amplifier may be simplified into the following form:

$$y = g(f(x)).$$

The output y of the power amplifier is a function of the input x, the function f represents the nonlinear model of the power amplifier, and the function g represents a linear amplification model of the power amplifier.

The function g represents a linear transformation performed on the signal in a process in which the signal passes through the power amplifier, for example, signal amplification, and may further add noise n1. The function g may be expressed as:

$$g(f(x)) = h_1 f(x) + n1.$$

In the function g, only a linear transformation is performed on the signal f(x) and the noise n1 is added.

After the third signal y is transmitted through the channel (for example, a channel between the first apparatus and the second apparatus), a signal y' is obtained at a signal receiver, where y' may be represented as:

$$y' = k(g(f(x))).$$

In the function k, transformation, such as attenuation and fading, is performed on a signal in a channel transmission process, and noise n2 may further be added. The function k may be expressed as:

$$k(g(f(x))) = h_2 g(f(x)) + n2.$$

It can be learned that a linear transformation is also performed on the input signal in the function k, and y' may be expressed as:

$$y' = h_2(h_1 f(x) + n1) + n2.$$

Further, y' may be expressed as:

$$y' = h_1 h_2 f(x) + n3.$$

In the formula, n3=h2*n1+n2.

To obtain a nonlinear feature of the power amplifier, and further estimate the preprocessing parameter, noise n3 and linear transformation $h_1 h_2$ need to be removed from y' as much as possible to obtain f(x). It can be learned that a process of obtaining f(x) by taking $h_1 h_2$ as a whole $h_3$ is a typical channel estimation and channel equalization method.

$$y' = h_3 f(x) + n3.$$

A purpose of channel estimation is to estimate a time domain or frequency domain response of a channel (that is, channel estimation may be performed in time domain or frequency domain), and correct and restore received data. For an OFDM system, channel estimation may be used to estimate a channel frequency response, that is, estimate a channel frequency response of each sub-carrier.

In conclusion, channel estimation is to estimate $h_3$ as much as possible, to minimize an error between an estimated value and a real value.

Generally, a preset reference signal is inserted into a useful data signal, and the reference signal is known at both the transmitter and the receiver. After inserting a known reference signal into the to-be-sent useful data, a channel estimation result of a placement location of the reference signal may be obtained; and then, by using the channel estimation result of the placement location of the reference signal, channel estimation results of a placement location of the useful data signal and the placement location of the reference signal are obtained through interpolation, to complete channel estimation. The reference signal may be a pilot symbol or a training sequence. For example, channel estimation based on the pilot symbol is applicable to a continuous transmission system.

Channel equalization is a process of recovering a signal sent by a transmitter by using a received signal and an estimated channel. That is, f(x) is obtained by using a known y' and $h_3$, and f(x) may be obtained according to a zero forcing (zero forcing, ZF) equalization algorithm, a minimum mean square error (minimum mean square error, MMSE) algorithm, or any conventional algorithm of solving y=hx+n.

For the conversion from the fourth signal y' to the fifth signal d, in addition to channel estimation and channel equalization processing, one or more of the following operations may be further performed: fast fourier transform (fast fourier transform, FFT) to frequency domain, constellation point-based normalization, resource re-mapping, transformation to time domain, and the like.

The fourth signal y' is a time-domain signal, and the time-domain signal is transformed to a frequency-domain signal by using the FFT. The constellation point-based normalization may be understood as normalization on signal amplitudes by using an average amplitude value of constellation points in a constellation diagram.

Resource re-mapping means resource mapping performed in a resource mapping manner the same as that used by the first apparatus, and transforming to time domain includes, for example, inverse fast fourier transform IFFT, and optionally, further includes zero padding (padding), cyclic prefix CP addition, and the like.

In an optional implementation, the fifth signal d is a signal obtained by performing channel estimation and channel equalization on the fourth signal y', resource mapping is performed in a resource mapping manner the same as that used by the first apparatus, and transforming to time domain is performed. That is, the second apparatus may perform channel estimation by using the fourth signal y', perform channel equalization processing on the fourth signal y' based on an estimated channel, perform resource mapping in a resource mapping manner the same as that used by the first apparatus, and then perform transformation to time domain, to obtain the fifth signal d.

In a possible implementation, the fifth signal d is a signal obtained by performing fast fourier transform FFT, channel estimation, channel equalization, constellation point-based normalization, and resource re-mapping in a same resource mapping manner as the first apparatus, and then transforming the fourth signal y' to time domain (for example, transforming to time domain by using inverse fast fourier transform IFFT). That is, the second apparatus may perform fast fourier transform FFT, channel estimation, channel equalization, constellation point normalization, resource re-mapping in a same resource mapping manner as the first apparatus, and then transform the fourth signal y' to time domain (for example, transform the fourth signal y' to time domain by using inverse fast fourier transform IFFT), to obtain the fifth signal d.

In a possible implementation, in a process of converting the fourth signal y' to the fifth signal d, channel estimation and channel equalization are performed in frequency domain. The conversion process is as follows.

S1: A signal y' is a time-domain signal, and the signal y' is converted to frequency domain through FFT, to obtain $y_f$.

S2: Extract a signal $p_c$ at a pilot symbol location from $y_f$ based on a placement location of a pilot symbol p (which has been described above, and the pilot symbol is an example of a reference signal).

S3: Perform channel estimation by using p and $p_c$, to obtain a channel estimation result c of a placement location of the pilot symbol, where c is extended to c' through interpolation. The c' may be considered as h3 in the foregoing formula, and there is a channel estimation result at each time-frequency resource location.

S4: Perform channel equalization by using $y_f$ and c', to obtain $y_{fe}$.

S5: A modulation constellation point of a to-be-sent signal is known, and $y_{fe}$ performs normalization based on an average amplitude of the constellation point, to obtain $y_{fen}$.

S6: The $y_{fen}$ may continue to perform a conventional procedure such as demodulation and decoding, and the $y_{fen}$ and the pilot symbol are re-mapped to a time-frequency resource (for example, an OFDM time-frequency resource block) by using a same method as that of the transmit end, to obtain $y_{fenr}$.

S7: The $y_{fenr}$ performs IFFT to transform to time domain, to obtain the fifth signal d.

In this implementation, both the $y_{fenr}$ and the signal u are time-domain signals, and a difference is that the $y_{fenr}$ includes a nonlinear feature of a link. By minimizing the difference between $y_{fenr}$ and u, the difference between $y_{fenr}$ and u may be reduced after a plurality of times of update, thereby implementing partial cancellation of a nonlinear feature.

When an updated preprocessing parameter or a changed value of the preprocessing parameter is obtained based on the fifth signal d:

In an example, the updated preprocessing parameter or the changed value of the preprocessing parameter is determined based on a second signal x and a sixth signal z, where the second signal x is obtained by performing preprocessing on the first signal u by using the first preprocessing parameter, the sixth signal z is obtained by performing post-processing on the fifth signal d, and a post-processing parameter used for the post-processing is the same as the first preprocessing parameter.

It may be understood that a sequence of obtaining the second signal x and obtaining the sixth signal z is not limited.

The following describes a related process in which the second apparatus obtains the first preprocessing parameter.

In a first update (one update may also be referred to as one iteration), the first preprocessing parameter may also be referred to as an initial preprocessing parameter.

In an example, the second apparatus may learn of the initial preprocessing parameter in advance. For example, the initial preprocessing parameter is pre-specified in a protocol. For example, it is specified in the protocol that the initial preprocessing parameter is $k_{01} = 1$, and other parameters $k_{nm}$ are all 0; or $k_{01} = 0.9$, and other parameters $k_{nm}$ are all 0. For example, the first apparatus and the second apparatus agree that the preprocessing parameter is in a form of a memory polynomial, and includes 64 parameters (the 64 parameters are, for example, values of 64 $k_{nm}$, for example, a memory depth n is 8 values, where a value of n is an integer in 0 to 7, and a high-order term m is 8 values, where a value of m is an integer in 1 to 8; or a memory depth n is 16 values, where a value of n is an integer in 0 to 15, and a higher-order term m is 4 values, and a value of m is an integer in 1 to 4). It is specified that in an initial state, the first parameter of the 64 parameters is 1, and remaining parameters are all 0 (that is, $k_{01} = 1$, and other parameters $k_{nm}$ are all 0). Generally, the first parameter corresponds to a current sampling moment. According to the pre-distortion processing manner, a preprocessed sampling signal processed by using the initial preprocessing parameter is equal to an input signal at the current sampling moment, that is, x is equal to u. The second apparatus only needs to learn of a correspondence between the 64 parameters in advance, that is, a location of a combination of different memory depths and high-order terms in the 64 parameters (for example, in the values of $k_{nm}$, the memory depth n is increased first, and then the high-order term m is increased, and n and m corresponding to the values of 64 $k_{nm}$ are respectively (the first bit of each value in the following value combinations is a value of the memory depth n, and the second bit is a value of the high-order term m, for example, 01 indicates that n is 0, and m is 1): 01, 11, 21, 31, 41, ..., 02, 12, 22, 32, 42, ..., 03, 13, 23, 33, 43, ...; and for another example, a higher-order term m is increased first, and then the memory depth n is increased, and n and m corresponding to the values of 64 $k_{nm}$ are respectively 01, 02, 03, 04, 05, ..., 11, 12, 13, 14, 15, ..., 21, 22, 23, 24, 25...), so that the first apparatus does not need to configure the initial preprocessing parameter for the second apparatus. The second apparatus may process the signal d based on the pre-stored initial preprocessing parameter.

For example, it is specified in a protocol that the initial preprocessing parameter (a neural network parameter, without considering the weight value) is [128, 256, 256, 2].

In an example, the second apparatus learns of a first parameter related to preprocessing in advance, where the first parameter is related to the initial preprocessing parameter, and a data amount is relatively small. For example, the related first parameter is specified in advance, and the second apparatus may derive the initial preprocessing parameter based on the first parameter.

For example, if the preprocessing parameter includes a neural network parameter and a weight value, it is specified in the protocol that the first parameter (the neural network parameter) may be [128, 256, 256, 2]. The second apparatus finds a corresponding weight value based on the first parameter, uses the first parameter and the found weight value as the initial preprocessing parameter, and may further determine a quantity of preprocessing parameters and a correspondence between an input signal and a neuron at an input layer, that is, a neuron to which an input signal at a sampling moment is to be input. In this example, the first parameter is a neural network parameter, and the preprocessing parameter includes the neural network parameter and a weight value. Compared with the preprocessing parameter, the first parameter has a relatively small data amount.

For example, the related first parameter is a maximum value of a memory depth n and/or a maximum value of a higher-order term m. For example, a maximum value of n is 4, and a maximum value of m is 7.

In an example, the first apparatus sends configuration information to the second apparatus, where the configuration information indicates the initial preprocessing parameter or the first parameter related to initial preprocessing (for example, the initial preprocessing parameter).

The configuration information may be sent to the second apparatus in a message including the third signal y in step 301a, or may be sent to the second apparatus in a message different from a message includes the third signal y.

For example, the configuration information includes the initial preprocessing parameter.

For example, the configuration information includes the first parameter related to the preprocessing.

For another example, the configuration information includes index information, and the index information may be used to determine the initial preprocessing parameter or the first parameter based on a first mapping relationship. The first mapping relationship is a correspondence between an index and a preprocessing parameter, or a correspondence between an index and a first parameter. The first mapping relationship is represented in a form of a correspondence table. The first apparatus and the second apparatus maintain the first mapping relationship. The initial preprocessing parameter or the related first parameter may be implicitly indicated by using index information, and a data amount of the index information is small, thereby reducing signaling overheads.

For the second apparatus, the first preprocessing parameter is configured by the first apparatus; or the first preprocessing parameter is pre-specified; or the first preprocessing parameter is derived based on the first parameter related to the preprocessing (for example, the initial preprocessing parameter). For example, the related first parameter is a part of the first preprocessing parameter. The related first parameter may be configured by the first apparatus, or may be pre-specified.

The following describes a process in which the second apparatus obtains the first signal u.

The second apparatus may learn of the signal u in advance. For example, the first signal u may be a pre-configured (pre-specified in a protocol) signal dedicated to learning the preprocessing parameter. Alternatively, on the first apparatus side, the first signal u is obtained by performing processing such as encoding, modulation, resource mapping, and transformation to time domain on an original to-be-sent bit. On the second apparatus side, the first signal u is obtained by decoding, re-encoding, and modulation on the fourth signal y'. In this case, the second apparatus does not learn of the signal u in advance, and the second apparatus may decode the received fourth signal y', obtain a to-be-sent codeword only after the decoding succeeds, and then perform re-coding and modulation (for example, OFDM modulation) to obtain the time-domain signal u.

The following describes a related process in which the second apparatus determines the updated preprocessing parameter or the changed value of the preprocessing parameter based on the second signal x and the sixth signal z.

For example, the second apparatus determines an error e between the second signal x and the sixth signal z, and then re-estimates the preprocessing parameter or the changed value of the preprocessing parameter based on the error e, to make the square of e smaller.

For example, the updated preprocessing parameter or the changed value of the preprocessing parameter is estimated for an objective that an error e between the second signal x and the sixth signal z is less than or equal to a preset threshold.

For another example, the updated preprocessing parameter or the changed value of the preprocessing parameter is estimated for an objective that the second signal x is equal to the sixth signal z.

In an optional example, after estimating the preprocessing parameter or the changed value of the preprocessing parameter, the second apparatus may update and save the preprocessing parameter (for example, the initial preprocessing parameter). In this way, in a next update process (iteration), the first apparatus may not need to configure the preprocessing parameter or the first parameter related to the preprocessing for the second apparatus.

Step 302: The second apparatus sends a first indication to the first apparatus, and correspondingly, the first apparatus receives the first indication from the second apparatus.

The first indication indicates the updated preprocessing parameter. The updated preprocessing parameter is obtained based on the fifth signal d, the fifth signal d is a signal obtained by performing channel estimation and channel equalization on the fourth signal y', and the fourth signal y' is a signal obtained after the third signal y passes through a channel.

In an example, the second apparatus may directly indicate the updated preprocessing parameter.

In an example, the second apparatus indicates the change value of the preprocessing parameter, and implicitly indicates the updated preprocessing parameter by using the change value of the preprocessing parameter. It may alternatively be understood that the first indication includes information about a changed value of the preprocessing parameter. The changed value may be obtained by using the information, and the updated preprocessing parameter may be determined based on the changed value and the first preprocessing parameter. In addition, the changed value of the preprocessing parameter occupies a relatively small quantity of bits, to reduce signaling overheads.

In an example, the change value of the preprocessing parameter is a difference between the updated preprocessing parameter and the first preprocessing parameter, and the change value is a positive real number, a negative real number, or a complex number. For example, a sum of the first preprocessing parameter and the changed value of the preprocessing parameter is the updated preprocessing parameter.

For another example, a learning rate is preset. First preprocessing parameter+Changed value of the preprocessing parameter*Learning rate=Updated preprocessing parameter. The learning rate is set to prevent an excessive change of the preprocessing parameter in each iteration. Generally, the learning rate is set to a value greater than 0 and less than 1, for example, 0.01 or 0.001.

In the conventional technology, a part of signals are split from output of a PA at a transmit end, and a preprocessing parameter is updated. If a receive end estimates the updated preprocessing parameter, the signals at the transmit end do not need to be split, but the preprocessing parameter may be updated after the receive end receives the signal, that is, power amplification by the PA and update of the preprocessing parameter are separately performed at the transmit end and the receive end. This can effectively reduce complexity of the transmit end, reduce power consumption and costs of a feedback link at the transmit end, and do not need to set a feedback link at the transmit end to cause PA power to be split. At the receive end, linear parts of an air interface channel and a PA channel are eliminated by channel equalization, and a nonlinear part and noise of a component in a link are left. The receive end combines the PA channel and the air interface channel for processing, and no more complexity is added to the channel equalization.

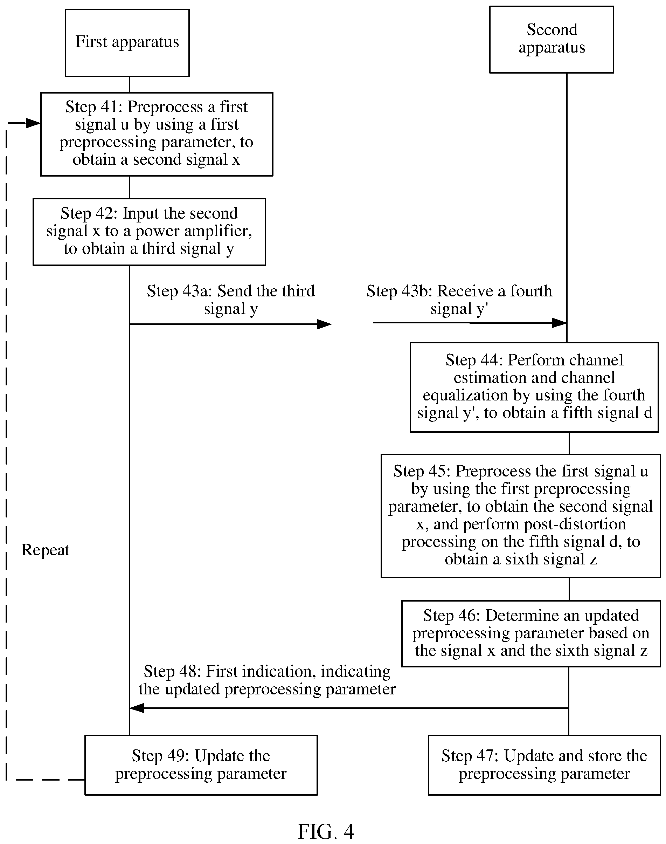

As shown in FIG. 4, a schematic diagram of an interaction process of updating a preprocessing parameter is further described. For specific details of the process, refer to the foregoing descriptions. Details are not described again.

Step 41: A first apparatus preprocesses a first signal u by using a first preprocessing parameter, to obtain a second signal x.

Step 42: The first apparatus inputs the second signal x to a device (for example, a power amplifier PA) with a nonlinear feature, to obtain a third signal y.

Step 43a: The first apparatus sends the third signal y to the second apparatus.

Step 43b: The second apparatus receives a fourth signal y' from the first apparatus, where the fourth signal y' is a signal obtained after the third signal y passes through a channel between the first apparatus and the second apparatus.

Step 44: The second apparatus performs processing such as channel estimation and channel equalization by using the fourth signal y', to obtain a fifth signal d.

Step 45: The second apparatus preprocesses the first signal u by using the first preprocessing parameter, to obtain a second signal x, and performs post-distortion processing on the fifth signal d, to obtain a sixth signal z.

Step 46: The second apparatus determines an updated preprocessing parameter or a changed value of the preprocessing parameter based on the second signal x and the sixth signal z.

Step 47: The second apparatus stores the updated preprocessing parameter.

Step 48: The second apparatus sends a first indication to the first apparatus, and correspondingly, the first apparatus receives the first indication from the second apparatus. The first indication indicates the updated preprocessing parameter.

Step 49: The first apparatus updates the prestored first preprocessing parameter by using the updated preprocessing parameter.

An end condition may be set, and whether to repeatedly perform the foregoing step 41 to step 49 is determined under the end condition.

In an optional example, an ending condition may be preset in the second apparatus. If the end condition is met, the second apparatus may further indicate to the first apparatus that the preprocessing parameter is updated. If the ending condition is not met, the second apparatus may not need to indicate to the first apparatus that the preprocessing parameter is updated, or the second apparatus may indicate to the first apparatus that the preprocessing parameter is not updated. For example, the end condition may be: a. A preset quantity of repetitions Xn is reached; b. An average value of change values of the preprocessing parameter is less than a preset value Xo; and c. An absolute value of the error e is less than a preset value Xe. The first apparatus may determine, based on an indication of the second apparatus, whether update of the preprocessing parameter is completed.

In an optional example, the end condition may be preset in the first apparatus. For example, the end condition may be a. The preset quantity of repetitions Xn is reached. The first apparatus determines, based on the ending condition, whether update of the preprocessing parameter is completed.

If the update is not completed, a next update process may be performed again, and the preprocessing parameter is re-estimated again. The first apparatus may preprocess the first signal u or a new input signal by using the updated preprocessing parameter. Step 41 to step 49 are repeatedly performed until the end condition is met, and update of the preprocessing parameter may be stopped.

In an example, nonlinearity of the PA is not time-varying, and is usually related to basic parameters such as an operating point, a temperature, and a carrier frequency of the PA. For different basic parameters, an optimal preprocessing parameter may be obtained by independently updating. For example, in different working conditions, an optimal preprocessing parameter is obtained through the update and stored in a table. Searching for and reading the preprocessing parameter from the table when the preprocessing parameter is used, or update of the preprocessing parameter is performed again.

In an example, composition of the preprocessing parameter is related to strength of nonlinearity of the PA. For example, when the PA works in a nonlinear region and a high frequency and a large bandwidth, nonlinearity of the PA is relatively strong, the highest order and a memory depth of a preprocessing parameter with a memory polynomial may be correspondingly increased, and an input dimension of the neural network and a quantity of neurons at each layer may also be correspondingly increased.

Although nonlinearity of the PA is not time-varying, features of the PA may change due to factors such as temperature drift and component aging. After a period of time, when the receive end finds that the optimal preprocessing parameter obtained in a previous update cannot achieve an initial effect of reducing a performance indicator (for example, an EVM or an ACLR), the receive end may choose to return the initial preprocessing parameter, or use a current preprocessing parameter as the initial preprocessing parameter, and start to update the preprocessing parameter again.

The EVM and the ACLR may be used as reference performance indicators for determining whether to update the preprocessing parameter again. A larger EVM or a larger ACLR indicates poorer performance. For example, when the deterioration of the EVM average value in a period of time exceeds 10% of the original EVM average value, it is considered that the current preprocessing parameter is no longer applicable, and a preprocessing parameter re-update procedure needs to be triggered.

For example, before step 301a or step 41, the second apparatus sends a second indication to the first apparatus. Correspondingly, the first apparatus receives the second indication from the second apparatus, where the second indication is used to trigger update of the preprocessing parameter. Update of the preprocessing parameter herein may be understood as: updating the initial preprocessing parameter to the optimal preprocessing parameter. In a process of updating the initial preprocessing parameter to the optimal preprocessing parameter, one or more updates are required. The second apparatus sends the second indication to the first apparatus, and the first apparatus starts to perform the first update until the optimal preprocessing parameter is updated.

The second apparatus may send the second indication to the first apparatus when determining that the performance deteriorates or the performance deterioration exceeds a threshold. For example, a threshold $T_{EVM}$ or a threshold $T_{ACLR}$ is set. When a deterioration value of the EVM is greater than or equal to the $T_{EVM}$ and/or a deterioration value of the ACLR is greater than or equal to the $T_{ACLR}$, it is determined that the performance deterioration exceeds the threshold. The deterioration value of the EVM is, for example, (Current EVM-Previous EVM)/Previous EVM. For example, if the previous EVM is 20%, and after a period of time, the current EVM is 30%, the deterioration value=(30%-20%)/20%=50%.

In an optional example, the second indication may be indication information, for example, occupying one or more bits, and update of the preprocessing parameter is triggered by using a value of the bit. For example, one bit is occupied. When a value of the one bit is 1, it indicates that update of the preprocessing parameter is triggered. When a value of the one bit is 0, it indicates that update of the preprocessing parameter is not triggered. Alternatively, when a value of the one bit is 0, it indicates that update of the preprocessing parameter is triggered; or when a value of the one bit is 1, it indicates that update of the preprocessing parameter is not triggered. Optionally, the second indication may further include a cause value, and the cause value indicates a cause for triggering the update. The cause value is, for example, deterioration of a performance indicator.

In an optional example, the second indication may include information about a performance indicator, and the information about the performance indicator implicitly indicates to trigger update of the preprocessing parameter. Alternatively, the first apparatus calculates, based on the performance indicator, whether the performance deteriorates, and if the performance deteriorates, triggers update of the preprocessing parameter.

The first apparatus may use the current preprocessing parameter as the initial preprocessing parameter, to perform an update process of the preprocessing parameter, for example, update the preprocessing parameter in the manner shown in FIG. 3 or FIG. 4.

Because the receive end is supported to update the preprocessing parameter, when the second apparatus finds that the performance deteriorates and the preprocessing parameter needs to be updated again, the second apparatus may send an indication to the first apparatus to update the preprocessing parameter again. In the conventional technology, a process of update of the preprocessing parameter and a process of power amplification by the PA are performed at a same end, and there is no signaling interaction for re-updating the preprocessing parameter.

The foregoing describes a schematic interaction diagram of updating the preprocessing parameter. In this application, the transmit end may also update the preprocessing parameter, that is, update of the preprocessing parameter and power amplification by the PA are performed at a same end.

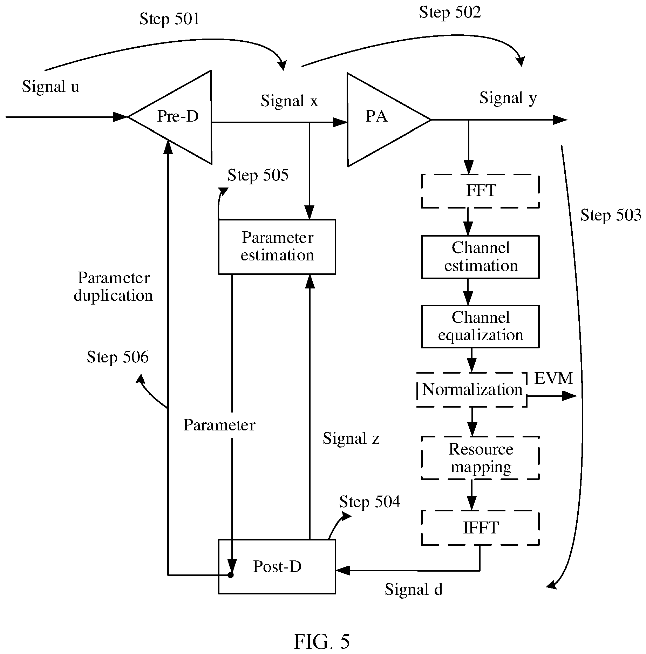

As shown in FIG. 5, a schematic flowchart of updating a preprocessing parameter by a transmit end is described. In this application, an architecture shown in FIG. 5 is defined as an equalized learning architecture (equalized learning architecture, ELA). This application provides an equalized learning architecture. In a scenario in which a conventional indirect learning architecture ILA cannot work normally, for example, when nonlinearity of a device is relatively strong, an optimal preprocessing parameter may also be obtained.

Step 501: Perform preprocessing (for example, pre-distortion (pre-distortion, PD) processing) on a first signal u by using a preprocessing parameter, to obtain a second signal x.

For the process, refer to the descriptions in step 301a. Details are not described again.

Step 502: Input the second signal x to a device (for example, a power amplifier PA) with a nonlinear feature, to obtain a third signal y.

An example in which the power amplifier may perform nonlinear transformation on a signal input to the power amplifier is used for description below.

In an example, a mapping relationship between the third signal y and the second signal x includes a nonlinear part.

As described above, an output y of the power amplifier is a function of an input x, and y=g(f(x)). The function f represents a nonlinear model of the power amplifier, and the function g represents a linear amplification model of the power amplifier.

Step 503: Perform channel estimation and channel equalization processing by using the third signal y, to obtain a fifth signal d.

A process of performing channel estimation and channel equalization by using the third signal is similar to a process of performing channel estimation and channel equalization by using the fourth signal y'.

Optionally, channel estimation and channel equalization may be performed by using the third signal y in frequency domain or time domain.

The following describes related content of filtering out the linear part of the third signal y output by the PA based on channel estimation and signal equalization.

The model of the power amplifier may be simplified into the following form:

$$y = g(f(x)).$$

The output y of the power amplifier is a function of the input x, the function f represents the nonlinear model of the power amplifier, and the function g represents a linear amplification model of the power amplifier.

The function g represents a linear transformation performed on the signal in a process in which the signal passes through the power amplifier, for example, signal amplification, and may further add noise n1. The function may be expressed as:

$$g(f(x)) = h_1 f(x) + n1.$$

In the function g, a linear transformation $h_1$ is performed on the signal f(x) and the noise n1 is added.

To obtain a nonlinear feature of the power amplifier, and further learn of a feature of a pre-distorter, noise n1 and linear transformation $h_1$ need to be removed from y as much as possible to obtain f(x).

In conclusion, channel estimation is to estimate $h_1$ as much as possible, to minimize an error between an estimated value and a real value.

Channel equalization is a process of recovering a signal sent by a transmitter by using a received signal and an estimated channel. That is, f(x) is obtained by using a known y and $h_1$.

For the conversion from the third signal y to the fifth signal d, in addition to channel estimation and channel equalization processing, one or more of the following operations may be further performed: fast fourier transform to frequency domain, constellation point-based normalization, resource re-mapping, transformation to time domain, and the like.

For example, channel estimation is performed on the third signal y in frequency domain, and after channel equalization processing is performed on the third signal y based on an estimated channel, resource mapping is performed in a resource mapping manner the same as that used by the first apparatus, and then the fifth signal d is obtained by IFFT transformation to time domain.

In an optional implementation, the fifth signal d is a signal obtained by performing channel estimation and channel equalization on the third signal y, resource mapping is performed again in a previous resource mapping manner, and conversion to time domain is performed. That is, the first apparatus may perform channel estimation by using the third signal y, perform channel equalization processing on the third signal y based on an estimated channel, perform resource mapping in a previous resource mapping manner, and then perform transformation to time domain, to obtain the fifth signal d.

In a possible implementation, the fifth signal d is a signal obtained by performing fast fourier transform FFT, channel estimation, channel equalization, constellation point-based normalization, and resource re-mapping in a previous resource mapping manner on the third signal y, and then transforming the third signal y to time domain (for example, transforming to time domain by using inverse fast fourier transform IFFT). That is, the first apparatus may perform fast fourier transform FFT, channel estimation, channel equalization, constellation point-based normalization, and resource re-mapping in a previous resource mapping manner on the third signal y, and then transform the third signal y to time domain (for example, transform the third signal y to time domain by using inverse fast fourier transform IFFT), to obtain the fifth signal d.

In a possible implementation, a process of converting the third signal y to the fifth signal d is similar to a process of converting the fourth signal y' to the fifth signal d. For example, S1 and y are time-domain signals, and the signal y is converted to frequency domain by using FFT, to obtain $y_f$. For subsequent S2 to S7, refer to S2 to S7 described above. Details are not described again.

Step 504: Perform post-distortion (post-D) processing on the fifth signal d, to obtain a sixth signal z. A post-distortion parameter used for post-distortion processing is the same as a preprocessing parameter used for preprocessing.

This step may also be considered as performing post-distortion processing on the fifth signal d by using the preprocessing parameter, to obtain the sixth signal z.

Step 505: Determine (estimate) an updated post-distortion parameter based on the second signal x and the sixth signal z.

Because the post-distortion parameter is copied to the preprocessing parameter subsequently, an updated post-distortion parameter may also be considered as the preprocessing parameter that is determined to update.

For example, an error e between the second signal x and the sixth signal z is determined, and then a post-distortion parameter (or a changed value of the post-distortion parameter) is re-estimated based on the error e, make the square of e smaller.

For example, the updated post-distortion parameter or the changed value of the post-distortion parameter is estimated for an objective that the error e between the second signal x and the sixth signal z is less than or equal to a preset threshold.

For another example, the updated post-distortion parameter or the changed value of the post-distortion parameter is estimated for an objective that the second signal x is equal to the sixth signal z.

Step 506: Copy the post-distortion parameter for preprocessing, so that the post-distortion parameter is the same as the preprocessing parameter.

Steps 501 to 506 are repeated for a plurality of times until an end condition is met.

The end condition may be: a. A preset quantity of repetitions Xn is reached; b. An average value of change values of the preprocessing parameter is less than a preset value Xo; and c. An absolute value of the error e is less than a preset value Xe.

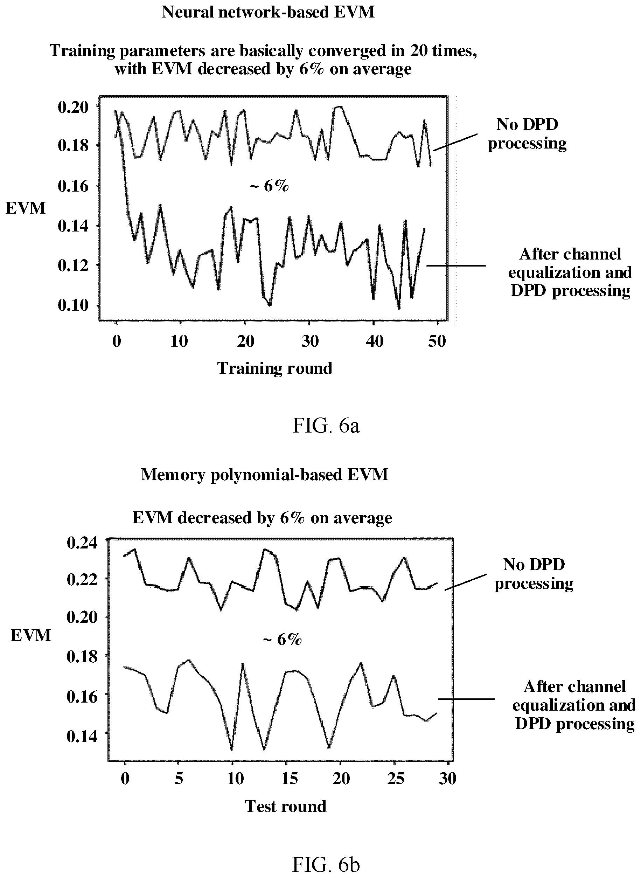

As shown in FIG. 6a, a schematic diagram of a change of an error vector magnitude EVM with a training round is provided. A horizontal coordinate is a training round, and a vertical coordinate is an error vector magnitude EVM. This is an error vector magnitude EVM variation of an equalized learning architecture based on a neural network. It can be learned from the figure that, without digital pre-distortion DPD processing, the average value of EVM is about 18%. After channel equalization and DPD processing, the parameter is basically converged after 20 iterations (an average value of the parameter does not change greatly after 20 iterations), and the average value of the error vector magnitude EVM is about 12%. The error vector magnitude (EVM) decreases from 18% to 12% after DPD processing.

As shown in FIG. 6b, a schematic diagram of a change of an error vector magnitude EVM with a training round is provided. A horizontal coordinate is a training (or test) round, and a vertical coordinate is an error vector magnitude EVM. This is an EVM change of an equalized learning architecture with memory polynomials. It can be learned from the figure that, without digital pre-distortion DPD processing, the average value of the error vector magnitude EVM is about 22%. The average error vector magnitude (EVM) is about 16% after channel equalization and DPD processing. The error vector magnitude (EVM) decreases from 22% to 16% after DPD processing.

In an embodiment of this application, the preprocessing parameter is updated by using a deep reinforcement learning method, and the preprocessing parameter may alternatively be updated by using a combination of a receive end and a transmit end.

Deep reinforcement learning is a combination of a deep neural network and reinforcement learning.

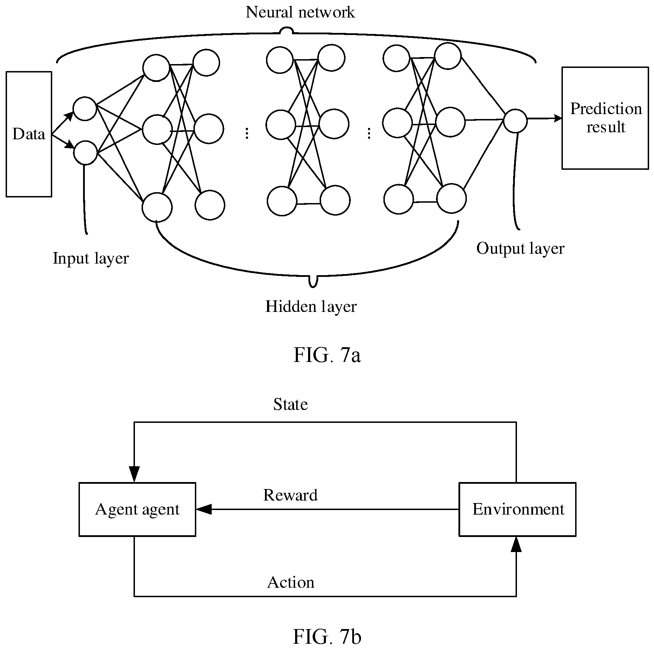

As shown in FIG. 7a, a deep neural network is a network, with an input layer and an output layer, and there is at least one hidden layer between the input layer and the output layer. The hidden layer has a nonlinear activation function processing function, and the nonlinear activation function is, for example, a rectified linear unit (rectified linear unit, ReLU) or a tanh function. The deep neural network may be considered as a nonlinear transformation from an input to an output. For example, neurons on adjacent layers are connected to each other, and a pair of connected neurons has a weight value and an offset value. After data is input to an input layer, an output layer outputs a prediction result after the weight value and the offset value corresponding to each layer are processed. Generally, it is expected that the prediction result output by the neural network is as close as possible to a real result corresponding to the data. Therefore, a weight value and an offset value corresponding to a neuron at each layer may be updated based on a difference between the prediction result and a real result.

For example, a loss function is calculated based on the prediction result and the real result, and a gradient corresponding to each neuron is calculated based on the loss function (loss function) in a direction from the last layer to the first layer. For example, the gradient may be obtained by calculating a derivative of a weight by using the loss function. After the gradient corresponding to each neuron is obtained, the gradient may be returned from the output layer to the input layer according to a back-propagation (back-propagation) algorithm, and the weight value and the offset value corresponding to each neuron are corrected by using each gradient, so that the prediction result is closer to the real result.

Reinforcement learning is a process in which an agent (agent) learns an optimal policy through trial and error (or exploration) during the interaction with the environment. As shown in FIG. 7b, reinforcement learning considers learning as an exploration and evaluation process. The agent selects an action for the environment. After the environment accepts the action, a status changes, and a reinforcement signal (a reward or a punishment) is generated and fed back to the agent. The agent selects a next action based on the reinforcement signal and a current status of the environment. A selection principle is to increase a probability of positive reinforced (a reward). The selected action affects not only an immediate reinforcement value, but also a state of the environment at a next moment and a final reinforcement value. If a specific action of the agent leads to a positive reward (strengthening signal) in the environment, the trend of the agent's subsequent action will be strengthened. The goal of the agent is to discover the action to maximize the maximum expected rewards. Reinforcement learning can provide solutions to problems that have a series of decisions, especially those that cannot be modeled theoretically or are difficult to solve.

In deep reinforcement learning, a state may be an input of a deep neural network, and an action corresponds to an output of the deep neural network. For example, the state may include a signal at a current sampling moment, a signal at a past sampling moment, and high-order terms of the signals. The action is a processed signal obtained after the state is input into a neural network. For example, the state includes a current preprocessing parameter, and the state includes an updated preprocessing parameter. The enhanced signal described above may also be referred to as a return value. In this example, the reward is a performance indicator, such as EVM or ACLR.

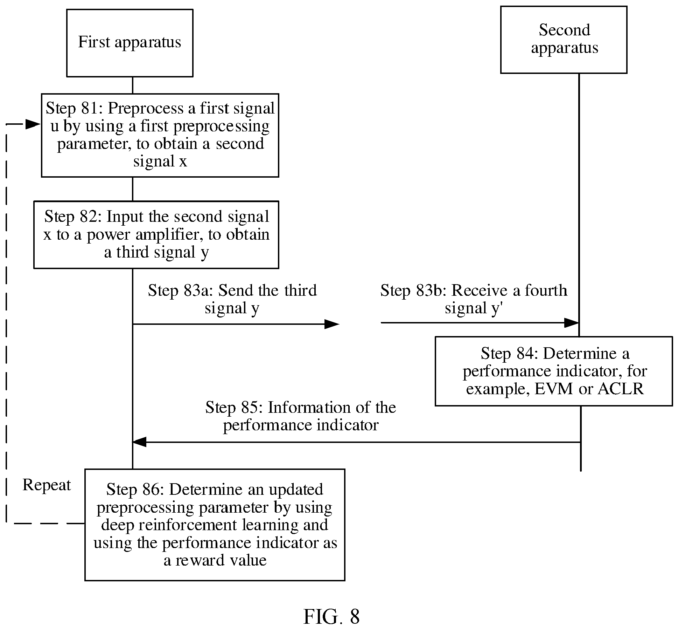

FIG. 8 is a schematic diagram of updating a preprocessing parameter. A second apparatus serves as a receive end, and feeds back information about a performance indicator to a first apparatus. The first apparatus updates the preprocessing parameter by using deep reinforcement learning in return for the performance indicator.

Step 81: The first apparatus preprocesses a first signal u by using a first preprocessing parameter, to obtain a second signal x.

Step 82: The first apparatus inputs the second signal x to a power amplifier PA, to obtain a third signal y.

Step 83a: The first apparatus sends the third signal y to the second apparatus.

Step 83b: The second apparatus receives a fourth signal y' from the first apparatus, where the fourth signal y' is a signal obtained after the third signal y passes through a channel between the first apparatus and the second apparatus.

For a process of step 81 to step 83b, refer to the foregoing descriptions in FIG. 3. Details are not described again. It should be noted that the first preprocessing parameter is in a form of a neural network instead of a form of a memory polynomial. In the first update, the first preprocessing parameter is referred to as an initial preprocessing parameter.

Step 84: The second apparatus determines a performance indicator.

The performance indicator is, for example, EVM and/or ACLR.

In an example, the second apparatus calculates an EVM and/or measures an ACLR based on the fourth signal y'.

Step 85: The second apparatus sends information about the performance indicator to the first apparatus, and correspondingly, the first apparatus receives the information about the performance indicator from the second apparatus. The information about the performance indicator indicates the performance indicator, for example, an EVM and/or an ACLR.

Step 86: The first apparatus determines an updated preprocessing parameter by using deep reinforcement learning and using the performance indicator as a reward value (a reinforcement signal).

The initial deep neural network parameter is the initial preprocessing parameter.

In an optional example, an end condition may be set in the first apparatus, and whether to repeatedly perform the foregoing step 81 to step 89 is determined under the end condition. For example, the end condition is: a. A preset quantity of repetitions Rn is reached; b. An average value of a change amount of the preprocessing parameter is less than a preset value Ro; and c. An increase amplitude of a reward value is less than a preset value Rr.

If the end condition is not met, the first apparatus may preprocess the first signal u or a new input signal by using the updated preprocessing parameter. Step 85 and step 86 are repeatedly performed until the end condition is met, and update of the preprocessing parameter may be stopped.

For a strongly nonlinear device, it is difficult to find a function relationship between an input and an output of the device. If the supervised learning method or the method of the indirect learning architecture shown in FIG. 2 is used for updating the preprocessing parameter, a problem of inaccurate matching of an input/output function of the device exists. In the deep reinforcement learning method, a process of matching an input/output function may be skipped, and the preprocessing parameter is updated only based on a final performance indicator, so that performance of an obtained optimal preprocessing parameter is relatively high.

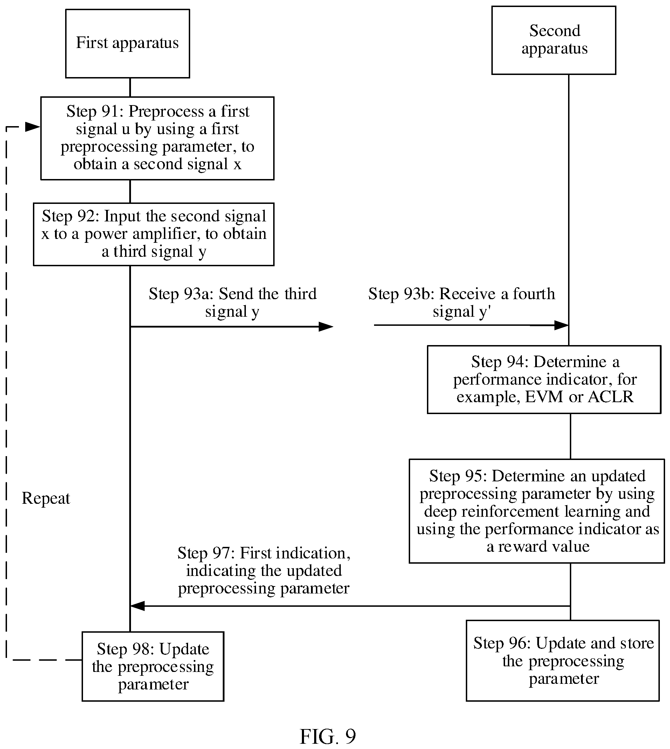

In FIG. 8, the second apparatus feeds back the performance indicator to the first apparatus, and the first apparatus updates the preprocessing parameter. In another example, as shown in FIG. 9, a second apparatus may also update a preprocessing parameter based on a performance indicator, and send an updated preprocessing parameter to a first apparatus.

Step 91: The first apparatus preprocesses a first signal u by using a first preprocessing parameter, to obtain a second signal x.

Step 92: The first apparatus inputs the second signal x to a power amplifier PA, to obtain a third signal y.

Step 93a: The first apparatus sends the third signal y to the second apparatus.

Step 93b: The second apparatus receives a fourth signal y' from the first apparatus, where the fourth signal y' is a signal obtained after the third signal y passes through a channel between the first apparatus and the second apparatus.

For a process of step 91 to step 93b, refer to the foregoing descriptions in FIG. 3. Details are not described again.

Step 94: The second apparatus determines a performance indicator.

The performance indicator is, for example, EVM and/or ACLR.

Step 95: The second apparatus determines an updated preprocessing parameter by using deep reinforcement learning and using the performance indicator as a reward value (a reinforcement signal).

It should be noted that the first preprocessing parameter is in a form of a neural network instead of a form of a memory polynomial. In the first update, the first preprocessing parameter is referred to as an initial preprocessing parameter.

The initial deep neural network parameter is the initial preprocessing parameter.

For the second apparatus, a manner of obtaining the first preprocessing parameter is the same as that of obtaining the first preprocessing parameter by the second apparatus described in FIG. 3. For example, the first preprocessing parameter is configured by the first apparatus; or the first preprocessing parameter is pre-specified; or the first preprocessing parameter is derived based on the first parameter related to the preprocessing (for example, the initial preprocessing parameter). For example, the related first parameter is a part of the first preprocessing parameter. The related first parameter may be configured by the first apparatus, or may be pre-specified.

Step 96: The second apparatus may also update and save the preprocessing parameter, to perform next deep reinforcement learning. To facilitate the next update of the preprocessing parameter, the first apparatus does not need to send the preprocessing parameter.

Step 97: The second apparatus sends a first indication to the first apparatus, and correspondingly, the first apparatus receives the first indication from the second apparatus. The first indication indicates the updated preprocessing parameter.

Step 97 is the same as step 302. Details are not described again.

Step 98: The first apparatus updates the pre-stored first preprocessing parameter by using the updated preprocessing parameter.

An end condition may be set, and whether to repeatedly perform the foregoing step 91 to step 98 is determined under the end condition.

In an optional example, an ending condition may be preset in the second apparatus. If the end condition is met, the second apparatus may further indicate to the first apparatus that the preprocessing parameter is updated. If the ending condition is not met, the second apparatus may not need to indicate to the first apparatus that the preprocessing parameter is updated, or the second apparatus may indicate to the first apparatus that the preprocessing parameter is not updated. For example, the end condition may be: a. A preset quantity of repetitions Rn is reached; b. An average value of a change amount of the preprocessing parameter is less than a preset value Ro; and c. An increase amplitude of a reward value is less than a preset value Rr. The first apparatus may determine, based on an indication of the second apparatus, whether update of the preprocessing parameter is completed.

In an optional example, the end condition may be preset in the first apparatus. For example, the end condition may be a. The preset quantity of repetitions Rn is reached. The first apparatus determines, based on the ending condition, whether update of the preprocessing parameter is completed.

If the update is not completed, a next update process may be performed again, and the preprocessing parameter is re-estimated again. The first apparatus may preprocess the first signal u or a new input signal by using the updated preprocessing parameter. Step 91 to step 98 are repeatedly performed until the end condition is met, and the learning of the preprocessing parameter may be stopped.

The foregoing describes the method in embodiments of this application, and the following describes an apparatus in embodiments of this application. The method and the apparatus are based on a same technical concept. The method and the apparatus have similar principles for resolving problems. Therefore, for implementations of the apparatus and the method, refer to each other. Details are not repeated herein.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It is to be noted that, in this embodiment of this application, division into the modules is an example, and is merely a logical function division. In a specific implementation, another division manner may be used.

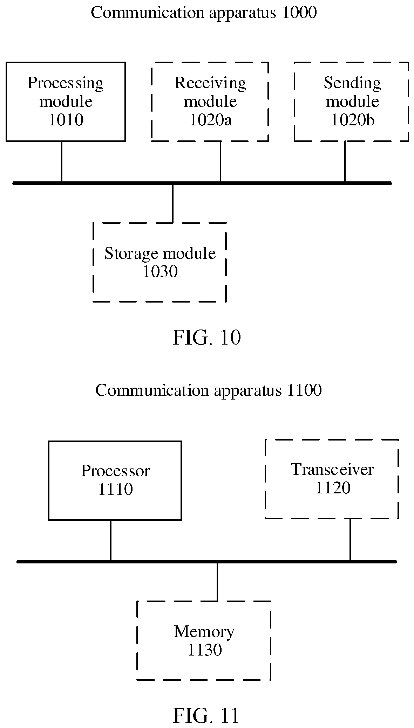

Based on a same technical concept as the foregoing method, FIG. 10 provides a schematic diagram of a structure of a communication apparatus 1000. The apparatus 1000 may include a processing module 1010, and optionally, further includes a receiving module 1020a, a sending module 1020b, and a storage module 1030. The processing module 1010 may be separately coupled to the storage module 1030, the receiving module 1020a, and the sending module 1020b. The storage module 1030 may also be coupled to the receiving module 1020a and the sending module 1020b.

In an example, the receiving module 1020a and the sending module 1020b may also be integrated together, and are defined as a transceiver module.

In an example, the apparatus 1000 may be the first apparatus described above, or may be a chip or a functional unit applied to the first apparatus. The apparatus 1000 has any function of the first apparatus in the foregoing method. For example, the apparatus 1000 can perform the steps performed by the first apparatus in the methods in FIG. 3, FIG. 4, FIG. 5, FIG. 8, and FIG. 9.

The receiving module 1020a may perform a receiving action performed by the first apparatus in the foregoing method embodiment.

The sending module 1020b may perform a sending action performed by the first apparatus in the foregoing method embodiment.

The processing module 1010 may perform an action other than a sending action and a receiving action in the actions performed by the first apparatus in the foregoing method embodiment.

In an example, the sending module 1020b is configured to send a third signal y to a second apparatus, where the third signal y is a signal obtained by performing preprocessing and power amplification on a first signal u by using a first preprocessing parameter.

The receiving module 1020a is configured to receive a first indication from the second apparatus, where the first indication indicates an updated preprocessing parameter, the updated preprocessing parameter is obtained based on a fifth signal d, the fifth signal d is a signal obtained by performing channel estimation and channel equalization by using a fourth signal y', and the fourth signal y' is a signal obtained after the third signal y passes through the channel.

In a possible implementation, the sending module 1020b is further configured to send configuration information to the second apparatus, where the configuration information indicates the first preprocessing parameter or a first parameter related to the preprocessing.

In a possible implementation, the receiving module 1020a is configured to receive a second indication from the second apparatus, where the second indication is used to trigger update of the preprocessing parameter.

In a possible implementation, the processing module 1010 is configured to preprocess the first signal u or a new input signal by using the updated preprocessing parameter.

In an example, the storage module 1030 may store computer-executable instructions for implementing the method performed by the first apparatus, so that the processing module 1010, the receiving module 1020a, and the sending module 1020b perform the method performed by the first apparatus in the foregoing example.

For example, the storage module may include one or more memories. The memories may be one or more devices or components in a circuit that are used to store a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

In an example, the apparatus 1000 may be the second apparatus described above, or may be a chip or a functional unit applied to the second apparatus. The apparatus 1000 has any function of the second apparatus in the foregoing method. For example, the apparatus 1000 can perform the steps performed by the second apparatus in the methods in FIG. 3, FIG. 4, FIG. 5, FIG. 8, and FIG. 9.

The receiving module 1020a may perform a receiving action performed by the second apparatus in the foregoing method embodiment.

The sending module 1020b may perform a sending action performed by the second apparatus in the foregoing method embodiment.

The processing module 1010 may perform an action other than a sending action and a receiving action in the actions performed by the second apparatus in the foregoing method embodiment.

In an example, the receiving module 1020a is configured to receive a fourth signal y' from a first apparatus, where the fourth signal y' is a signal obtained after a third signal y passes through a channel between the first apparatus and the apparatus, and the third signal y is a signal obtained by performing preprocessing and power amplification on a first signal u by using a first preprocessing parameter.

The sending module 1020a is configured to send a first indication to the first apparatus, where the first indication indicates an updated preprocessing parameter, the updated preprocessing parameter is obtained based on a fifth signal d, and the fifth signal d is a signal obtained by performing channel estimation and channel equalization by using the fourth signal y'.

In a possible implementation, the sending module 1020a is further configured to send a second indication to the first apparatus, where the second indication is used to trigger update of the preprocessing parameter.

In an example, the storage module 1030 may store computer-executable instructions for implementing the method performed by the second apparatus, so that the processing module 1010, the receiving module 1020a, and the sending module 1020b perform the method performed by the second apparatus in the foregoing example.

For example, the storage module may include one or more memories. The memories may be one or more devices or components in a circuit that are used to store a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

The foregoing describes the apparatus applied to the first apparatus and the apparatus applied to the second apparatus in embodiments of this application. The following describes possible product forms of the apparatus applied to the first apparatus and the apparatus applied to the second apparatus. It should be understood that any product having the feature of the apparatus applied to the first apparatus and any product having the feature of the apparatus applied to the second apparatus in FIG. 10 fall within the protection scope of this application. It should be further understood that the following descriptions are merely an example, and a product form of the apparatus applied to the first apparatus and a product form of the apparatus applied to the second apparatus in embodiments of this application are not only limited thereto.

As a possible product form, the apparatus may be implemented using a general bus architecture.

FIG. 11 is a schematic block diagram of a communication apparatus 1100.

The apparatus 1100 may include a processor 1110, and optionally, further include a transceiver 1120 and a memory 1130. The transceiver 1120 may be configured to receive a program or instructions and transmit the program or the instructions to the processor 1110. Alternatively, the transceiver 1120 may be configured to perform communication interaction between the apparatus 1100 and another communication device, for example, exchange control signaling and/or service data. The transceiver 1120 may be a code and/or data read/write transceiver, or the transceiver 1120 may be a signal transmission transceiver between the processor and the transceiver. The processor 1110 and the memory 1130 are electrically coupled.

In an example, the apparatus 1100 may be the first apparatus, or may be a chip applied to the first apparatus. It should be understood that the apparatus has any function of the first apparatus in the foregoing method. For example, the apparatus 1100 can perform the steps performed by the first apparatus in the methods in FIG. 3, FIG. 4, FIG. 5, FIG. 8, and FIG. 9. For example, the memory 1130 is configured to store a computer program. The processor 1110 may be configured to invoke the computer program or instructions stored in the memory 1130, to perform the method performed by the first apparatus in the foregoing example, or perform, by using the transceiver 1120, the method performed by the first apparatus in the foregoing example.

In an example, the apparatus 1100 may be the second apparatus, or may be a chip applied to the second apparatus. It should be understood that the apparatus has any function of the second apparatus in the foregoing method. For example, the apparatus 1100 can perform the steps performed by the second apparatus in the methods in FIG. 3, FIG. 4, FIG. 5, FIG. 8, and FIG. 9. For example, the memory 1130 is configured to store a computer program. The processor 1110 may be configured to invoke the computer program or instructions stored in the memory 1130, to perform the method performed by the second apparatus in the foregoing example, or perform, by using the transceiver 1120, the method performed by the second apparatus in the foregoing example.

The processing module 1010 in FIG. 10 may be implemented by using the processor 1110.

The receiving module 1020a and the sending module 1020b in FIG. 10 may be implemented by using the transceiver 1120. Alternatively, the transceiver 1120 includes a receiver and a transmitter. The receiver performs a function of the receiving module, and the transmitter performs a function of the sending module.

The storage module 1030 in FIG. 10 may be implemented by using the memory 1130.

As a possible product form, the apparatus may be implemented by a general-purpose processor (where the general-purpose processor may also be referred to as a chip or a chip system).

In a possible implementation, the general-purpose processor that implements the apparatus applied to the first apparatus or the second apparatus includes a processing circuit (where the processing circuit may also be referred to as a processor); and optionally, further includes an input/output interface and a storage medium (where the storage medium may also be referred to as a memory) that are connected to and communicate with the processing circuit. The storage medium is configured to store instructions executed by the processing circuit, to perform the method performed by the first apparatus or the second apparatus in the foregoing example.

The processing module 1010 in FIG. 10 may be implemented by using the processing circuit.

The receiving module 1020a and the sending module 1020b in FIG. 10 may be implemented by using the input/output interface. Alternatively, the input/output interface includes an input interface and an output interface. The input interface performs a function of the receiving module, and the output interface performs a function of the sending module.

The storage module 1030 in FIG. 10 may be implemented by using the storage medium.

As a possible product form, the apparatus in embodiments of this application may be further implemented by using the following: one or more FPGAs (field programmable gate arrays), a PLD (programmable logic device), a controller, a state machine, a gate logic, a discrete hardware component, any other proper circuit, or any combination of circuits that may perform various functions described in this application.

An embodiment of this application further provides a computer-readable storage medium, storing a computer program. When the computer program is executed by a computer, the computer is enabled to perform the foregoing method for updating a preprocessing parameter. In other words, the computer program includes instructions for implementing the foregoing method for updating a preprocessing parameter.

An embodiment of this application further provides a computer program product, including computer program code. When the computer program code is run on a computer, the computer is enabled to perform the foregoing method for updating a preprocessing parameter.

An embodiment of this application further provides a communication system. The communication system includes a first apparatus and a second apparatus that perform the foregoing method for updating a preprocessing parameter.

In addition, the processor mentioned in embodiments of this application may be a central processing unit (central processing unit, CPU) or a baseband processor, and the baseband processor and the CPU may be integrated or separated; or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), another programmable logic device, a discrete gate or a transistor logic device, a discrete hardware component, or any combination thereof. The general-purpose processor may be a microprocessor, or the processor may be any conventional processor or the like.

The memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory described in this application aims to include but is not limited to these memories and any memory of another proper type.

The transceiver mentioned in embodiments of this application may include a separate transmitter and/or a separate receiver, or the transmitter and the receiver may be integrated. The transceiver may operate based on an indication of a corresponding processor. Optionally, the transmitter may correspond to a transmitter machine in a physical device, and the receiver may correspond to a receiver machine in the physical device.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk drive, a read-only memory (read-only memory, ROM), a random access memory (random access memory, RAM), a magnetic disk, or an optical disc.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of' in this application means two or more. In addition, it should be understood that in description of this application, terms such as "first" and "second" are merely used for a purpose of distinguishing and description, and shall not be understood as an indication or implication of relative importance or an indication or implication of an order.

## Claims

1. A method for updating a preprocessing parameter, comprising:

   sending, by a first apparatus, a third signal to a second apparatus, wherein the third signal is a signal obtained by performing preprocessing and power amplification on a first signal by using a first preprocessing parameter; and
   receiving, by the first apparatus, a first indication from the second apparatus, wherein the first indication indicates an updated preprocessing parameter, the updated preprocessing parameter is obtained based on a fifth signal, the fifth signal is a signal obtained by performing channel estimation and channel equalization by using a fourth signal, and the fourth signal is a signal obtained after the third signal passes through the channel.

2. The method according to claim 1, wherein the first indication comprises information about a changed value of the preprocessing parameter.

**3.** The method according to claim 1 or 2, wherein before the receiving, by the first apparatus, a first indication from the second apparatus, the method further comprises:
sending, by the first apparatus, configuration information, wherein the configuration information indicates the first preprocessing parameter or a first parameter related to the preprocessing.

**4.** The method according to any one of claims 1 to 3, wherein before the sending, by a first apparatus, a third signal to a second apparatus, the method further comprises:
receiving, by the first apparatus, a second indication, wherein the second indication is used to trigger update of the preprocessing parameter.

**5.** The method according to any one of claims 1 to 4, further comprising:
preprocessing the first signal or a new input signal by using the updated preprocessing parameter.

**6.** A method for updating a preprocessing parameter, comprising:

receiving, by a second apparatus, a fourth signal from a first apparatus, wherein the fourth signal is a signal obtained after a third signal passes through a channel between the first apparatus and the second apparatus, and the third signal is a signal obtained by performing preprocessing and power amplification on a first signal by using a first preprocessing parameter; and
sending, by the second apparatus, a first indication to the first apparatus, wherein the first indication indicates an updated preprocessing parameter, the updated preprocessing parameter is obtained based on a fifth signal, and the fifth signal is a signal obtained by performing channel estimation and channel equalization by using the fourth signal.

**7.** The method according to claim 6, wherein the third signal is specifically a signal obtained by performing preprocessing on the first signal by using the first preprocessing parameter to obtain a second signal, and inputting the second signal to a power amplifier PA; and
the updated preprocessing parameter is determined based on the second signal and a sixth signal, wherein the second signal is obtained by performing preprocessing on the first signal by using the first preprocessing parameter, the sixth signal is obtained by performing post-processing on the fifth signal, and a post-processing parameter used for the post-processing is the same as the first preprocessing parameter.

**8.** The method according to claim 6 or 7, wherein the fifth signal is a signal obtained by performing fast fourier transform FFT, channel estimation, channel equalization, constellation point-based normalization, resource re-mapping in a resource mapping manner the same as that used by the first apparatus, and inverse fast fourier transform IFFT on the fourth signal.

**9.** The method according to any one of claims 6 to 8, wherein the first indication comprises information about a changed value of the preprocessing parameter.

**10.** The method according to any one of claims 6 to 9, wherein

the first preprocessing parameter is configured by the first apparatus;
the first preprocessing parameter is pre-specified; or
the first preprocessing parameter is derived based on a first parameter related to the preprocessing.

**11.** The method according to any one of claims 6 to 10, wherein

the first signal is pre-specified; or
the first signal is obtained by decoding, re-encoding, and modulating the fourth signal.

**12.** The method according to any one of claims 6 to 11, further comprising:
sending, by the second apparatus, a second indication to the first apparatus, wherein the second indication is used to trigger update of the preprocessing parameter.

**13.** A method for updating a preprocessing parameter, comprising:

sending, by a first apparatus, a third signal to a second apparatus, wherein the third signal is a signal obtained by performing preprocessing and power amplification on a first signal by using a first preprocessing parameter, and the third signal is changed to a fourth signal after passing through a channel between the first apparatus and the second apparatus;
receiving, by the first apparatus, a performance indicator value from the second apparatus, wherein the performance indicator value is obtained based on the fourth signal; and
determining, by the first apparatus, an updated preprocessing parameter by using deep reinforcement learning and using the performance indicator value as a reward value.

14. The method according to claim 13, wherein the performance indicator comprises an error vector magnitude EVM and/or an adjacent channel leakage ratio ACLR.

15. The method according to claim 13 or 14, further comprising:
    receiving, by the first apparatus, a second indication from the second apparatus, wherein the second indication is used to trigger update of the preprocessing parameter.

16. A method for updating a preprocessing parameter, comprising:

    receiving, by a second apparatus, a fourth signal from a first apparatus, wherein the fourth signal is a signal obtained after a third signal passes through a channel between the first apparatus and the second apparatus, and the third signal is a signal obtained by performing preprocessing and power amplification on a first signal by using a first preprocessing parameter; and
    sending, by the second apparatus, a first indication to the first apparatus, wherein the first indication indicates an updated preprocessing parameter, the updated preprocessing parameter is obtained by using deep reinforcement learning and by using a performance indicator value as a reward value, and the performance indicator is obtained based on the fourth signal.

17. The method according to claim 16, wherein the performance indicator comprises an error vector magnitude EVM and/or an adjacent channel leakage ratio ACLR.

18. The method according to claim 16 or 17, wherein the first indication indicates a changed value of the preprocessing parameter.

19. The method according to any one of claims 16 to 18, further comprising:
    sending, by the second apparatus, a second indication to the first apparatus, wherein the second indication is used to trigger update of the preprocessing parameter.

20. A communication apparatus, comprising:

    a sending module, configured to send a third signal to a second apparatus, wherein the third signal is a signal obtained by performing preprocessing and power amplification on a first signal by using a first preprocessing parameter;

and
a receiving module, configured to receive a first indication from the second apparatus, wherein the first indication indicates an updated preprocessing parameter, the updated preprocessing parameter is obtained based on a fifth signal, the fifth signal is a signal obtained by performing channel estimation and channel equalization by using a fourth signal, and the fourth signal is a signal obtained after the third signal passes through the channel.

21. The apparatus according to claim 20, wherein the first indication comprises information about a changed value of the preprocessing parameter.

22. The apparatus according to claim 20 or 21, wherein the sending module is further configured to send configuration information, wherein the configuration information indicates the first preprocessing parameter or a first parameter related to the preprocessing.

23. The apparatus according to any one of claims 20 to 22, wherein the receiving module is further configured to receive a second indication, wherein the second indication is used to trigger update of the preprocessing parameter.

24. The apparatus according to any one of claims 20 to 23, further comprising:
    a processing module, configured to preprocess the first signal or a new input signal by using the updated preprocessing parameter.

25. A communication apparatus, comprising:

    a receiving module, configured to receive a fourth signal from a first apparatus, wherein the fourth signal is a signal obtained after a third signal passes through a channel between the first apparatus and the communication apparatus, and the third signal is a signal obtained by performing preprocessing and power amplification on a first signal by using a first preprocessing parameter; and
    a sending module, configured to send a first indication to the first apparatus, wherein the first indication indicates an updated preprocessing parameter, the updated preprocessing parameter is obtained based on a fifth signal, and the fifth signal is a signal obtained by performing channel estimation and channel equalization by using the fourth signal.

26. The apparatus according to claim 25, wherein the third signal is specifically a signal obtained by performing preprocessing on the first signal by using the first preprocessing parameter to obtain a second signal, and inputting the second signal to a power amplifier PA; and

the updated preprocessing parameter is determined based on the second signal and a sixth signal, wherein the second signal is obtained by performing preprocessing on the first signal by using the first preprocessing parameter, the sixth signal is obtained by performing post-processing on the fifth signal, and a post-processing parameter used for the post-processing is the same as the first preprocessing parameter.

27. The apparatus according to claim 25 or 26, wherein the fifth signal is a signal obtained by performing fast fourier transform FFT, channel estimation, channel equalization, constellation point-based normalization, resource re-mapping in a resource mapping manner the same as that used by the first apparatus, and inverse fast fourier transform IFFT on the fourth signal.

28. The apparatus according to any one of claims 25 to 27, wherein the first indication comprises information about a changed value of the preprocessing parameter.

29. The apparatus according to any one of claims 25 to 28, wherein

the first preprocessing parameter is configured by the first apparatus;
the first preprocessing parameter is pre-specified; or
the first preprocessing parameter is derived based on a first parameter related to the preprocessing.

30. The apparatus according to any one of claims 25 to 29, wherein

the first signal is pre-specified; or
the first signal is obtained by decoding, re-encoding, and modulating the fourth signal.

31. The apparatus according to any one of claims 25 to 30, wherein the sending module is further configured to send a second indication to the first apparatus, wherein the second indication is used to trigger update of the preprocessing parameter.

32. A communication apparatus, comprising:

a sending module, configured to send a third signal to a second apparatus, wherein the third signal is a signal obtained by performing preprocessing and power amplification on a first signal by using a first preprocessing parameter, and the third signal is changed to a fourth signal after passing through a channel between the communication apparatus and the second apparatus;

a receiving module, configured to receive a performance indicator value from the second apparatus, wherein the performance indicator value is obtained based on the fourth signal; and

a processing module, configured to determine an updated preprocessing parameter by using deep reinforcement learning and using the performance indicator value as a reward value.

33. The apparatus according to claim 32, wherein the performance indicator comprises an error vector magnitude EVM and/or an adjacent channel leakage ratio ACLR.

34. The apparatus according to claim 32 or 33, wherein the receiving module is further configured to receive a second indication from the second apparatus, wherein the second indication is used to trigger update of the preprocessing parameter.

35. A communication apparatus, comprising:

a receiving module, configured to receive a fourth signal from a first apparatus, wherein the fourth signal is a signal obtained after a third signal passes through a channel between the first apparatus and the communication apparatus, and the third signal is a signal obtained by performing preprocessing and power amplification on a first signal by using a first preprocessing parameter; and

a sending module, configured to send a first indication to the first apparatus, wherein the first indication indicates an updated preprocessing parameter, the updated preprocessing parameter is obtained by using deep reinforcement learning and by using a performance indicator value as a reward value, and the performance indicator is obtained based on the fourth signal.

36. The apparatus according to claim 35, wherein the performance indicator comprises an error vector magnitude EVM and/or an adjacent channel leakage ratio ACLR.

37. The apparatus according to claim 35 or 36, wherein the first indication indicates a changed value of the preprocessing parameter.

38. The apparatus according to any one of claims 35 to 37, wherein the sending module is further configured to send a second indication to the first apparatus, wherein the second indication is used to trigger update of the preprocessing parameter.

**39.** A communication apparatus, comprising a processor and a memory, wherein the processor is coupled to the memory;

the memory is configured to store computer programs or instructions; and
the processor is configured to execute some or all of the computer programs or instructions in the memory, and when the some or all of the computer programs or instructions are executed, the processor is configured to implement the method according to any one of claims 1 to 5, the method according to any one of claims 6 to 12, the method according to any one of claims 13 to 15, or the method according to any one of claims 16 to 19.

**40.** A communication apparatus, comprising a processor coupled to a memory, wherein

the memory is configured to store computer programs or instructions; and
the processor is configured to execute some or all of the computer programs or instructions in the memory, and when the some or all of the computer programs or instructions are executed, the processor is configured to implement the method according to any one of claims 1 to 5, the method according to any one of claims 6 to 12, the method according to any one of claims 13 to 15, or the method according to any one of claims 16 to 19.

**41.** A chip system, comprising a processing circuit, wherein the processing circuit is coupled to a storage medium; and
the processing circuit is configured to execute some or all computer programs or instructions in the storage medium, and when the some or all computer programs or instructions are executed, the processing circuit is configured to implement the method according to any one of claims 1 to 5, the method according to any one of claims 6 to 12, the method according to any one of claims 13 to 15, or the method according to any one of claims 16 to 19.

**42.** A communication system, comprising a first apparatus for performing the method according to any one of claims 1 to 5 and a second apparatus for performing the method according to any one of claims 6 to 12.

**43.** A computer-readable storage medium, configured to store a computer program, wherein the computer program comprises instructions for implementing the method according to any one of claims 1 to 5, instructions for implementing the method according to any one of claims 6 to 12, instructions for implementing the method according to any one of claims 13 to 15, or instructions for implementing the method according to any one of claims 16 to 19.

**44.** A computer program product comprising instructions, wherein when the computer program product is run on a computer, the method according to any one of claims 1 to 5 is performed, the method according to any one of claims 6 to 12 is performed, the method according to any one of claims 13 to 15 is performed, or the method according to any one of claims 16 to 19 is performed.

Communication system 100

Network device
110

Terminal
120

FIG. 1

Step 201

Step 202

Noise n

Signal u

Pre-D

Signal x

PA

Signal y

Step 205

Step 206

Parameter
estimation

Step 203

Duplication   Parameter

Signal z

Step 204

Post-D

y/G

FIG. 2

First apparatus

Second apparatus

Step 301a: Send a third signal y

Step 301b: Receive a fourth signal y'

Step 302: First indication, indicating an updated preprocessing parameter

FIG. 3

First apparatus

Second apparatus

**Step 41:** Preprocess a first signal u by using a first preprocessing parameter, to obtain a second signal x

**Step 42:** Input the second signal x to a power amplifier, to obtain a third signal y

**Step 43a:** Send the third signal y

**Step 43b:** Receive a fourth signal y'

**Step 44:** Perform channel estimation and channel equalization by using the fourth signal y', to obtain a fifth signal d

**Step 45:** Preprocess the first signal u by using the first preprocessing parameter, to obtain the second signal x, and perform post-distortion processing on the fifth signal d, to obtain a sixth signal z

**Step 46:** Determine an updated preprocessing parameter based on the signal x and the sixth signal z

Repeat

**Step 48:** First indication, indicating the updated preprocessing parameter

**Step 49:** Update the preprocessing parameter

**Step 47:** Update and store the preprocessing parameter

FIG. 4

FIG. 5

**Neural network-based EVM**

**Training parameters are basically converged in 20 times, with EVM decreased by 6% on average**

No DPD processing

~ 6%

After channel equalization and DPD processing

EVM

Training round

FIG. 6a

**Memory polynomial-based EVM**

**EVM decreased by 6% on average**

No DPD processing

~ 6%

After channel equalization and DPD processing

EVM

Test round

FIG. 6b

Neural network

Data

Prediction
result

Input layer

Output layer

Hidden layer

FIG. 7a

State

Agent agent

Reward

Environment

Action

FIG. 7b

First apparatus

Second apparatus

Step 81: Preprocess a first signal u by using a first preprocessing parameter, to obtain a second signal x

Step 82: Input the second signal x to a power amplifier, to obtain a third signal y

Step 83a: Send the third signal y

Step 83b: Receive a fourth signal y'

Step 84: Determine a performance indicator, for example, EVM or ACLR

Step 85: Information of the performance indicator

Repeat

Step 86: Determine an updated preprocessing parameter by using deep reinforcement learning and using the performance indicator as a reward value

FIG. 8

First apparatus

Second apparatus

Step 91: Preprocess a first signal u by using a first preprocessing parameter, to obtain a second signal x

Step 92: Input the second signal x to a power amplifier, to obtain a third signal y

Step 93a: Send the third signal y

Step 93b: Receive a fourth signal y'

Step 94: Determine a performance indicator, for example, EVM or ACLR

Step 95: Determine an updated preprocessing parameter by using deep reinforcement learning and using the performance indicator as a reward value

Repeat

Step 97: First indication, indicating the updated preprocessing parameter

Step 98: Update the preprocessing parameter

Step 96: Update and store the preprocessing parameter

FIG. 9

Communication apparatus 1000

FIG. 10

Communication apparatus 1100

FIG. 11

| INTERNATIONAL SEARCH REPORT | International application No. |
| --- | --- |
| | **PCT/CN2022/100520** |

**A. CLASSIFICATION OF SUBJECT MATTER**

H04L 25/49(2006.01)i; H04L 25/03(2006.01)i; H04L 25/02(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 功率放大, 功放, 非线性, 消除, 抵消, 预处理, 预失真, 信道, 估计, 均衡, 更新, 调整, 参数, 学习, 性能, 回报, power w amplif+, nonlinear+, eliminat+, counteract, pretreatment, preprocess+, predistortion, channel, estimat+, equaliz+, updat+, adjust+, parameter, learn+, performance, return

**C. DOCUMENTS CONSIDERED TO BE RELEVANT**

| Category* | Citation of document, with indication, where appropriate, of the relevant passages | Relevant to claim No. |
| --- | --- | --- |
| A | CN 103685111 A (DATANG MOBILE COMMUNICATIONS EQUIPMENT CO., LTD.) 26 March 2014 (2014-03-26) description, paragraphs [0045]-[0051], and [0161]-[0164] | 1-44 |
| A | CN 101459636 A (ZTE CORP.) 17 June 2009 (2009-06-17) entire document | 1-44 |
| A | CN 101175061 A (BEIJING NORTHERN FIBERHOME TECHNOLOGIES CO., LTD.) 07 May 2008 (2008-05-07) entire document | 1-44 |
| A | US 2017244582 A1 (FREESCALE SEMICONDUCTOR, INC.) 24 August 2017 (2017-08-24) entire document | 1-44 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 August 2022** | **15 September 2022** |

| Name and mailing address of the ISA/CN | Authorized officer |
| --- | --- |
| **China National Intellectual Property Administration (ISA/CN)** No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/100520**

| Patent document cited in search report | | | Publication date (day/month/year) | Patent family member(s) | | | Publication date (day/month/year) |
|---|---|---|---|---|---|---|---|
| CN | 103685111 | A | 26 March 2014 | JP | 2017509179 | A | 30 March 2017 |
| | | | | KR | 20160096208 | A | 12 August 2016 |
| | | | | US | 2016329927 | A1 | 10 November 2016 |
| | | | | EP | 3089414 | A1 | 02 November 2016 |
| | | | | WO | 2015096735 | A1 | 02 July 2015 |
| CN | 101459636 | A | 17 June 2009 | CN | 101459636 | B | 18 April 2012 |
| CN | 101175061 | A | 07 May 2008 | CN | 101175061 | B | 04 May 2011 |
| US | 2017244582 | A1 | 24 August 2017 | US | 9749161 | B1 | 29 August 2017 |

Form PCT/ISA/210 (patent family annex) (January 2015)

**EP 4 351 096 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110706187